# EUROPEAN PATENT APPLICATION

(11) **EP 4 564 897 A1**
(43) Date of publication of application: **04.06.2025**
(21) Application number: 23849325.8
(22) Date of filing: 31.07.2023
(51) Int. Cl.: H04W 24/10, H04L 49/90

(54) **METHOD FOR REPORTING MEASUREMENT REPORT, AND COMMUNICATION APPARATUS AND COMMUNICATION SYSTEM**

(30) Priority: 04.08.2022 CN 202210934392; 15.02.2023 CN 202310155212
(71) Applicant: Huawei Technologies Co., Ltd., Shenzhen, Guangdong 518129 (CN)
(72) Inventor: LI, Jie, Shenzhen, Guangdong 518129 (CN); PENG, Wenjie, Shenzhen, Guangdong 518129 (CN)
(74) Representative: Isarpatent
(86) International application number: PCT/CN2023/110104
(87) International publication number: WO 2024/027617

(57) **Abstract**

Embodiments of this application relate to the communication field, and provide a method and a communication apparatus for reporting a measurement report, and a communication system. The method includes: reporting measurement reports of a plurality of first cells at a first moment, where the plurality of first cells are cells in a first list, the first list includes a cell whose measurement report is to be reported, and a quantity of cells in the first list is greater than or equal to a first threshold; and reporting a measurement report when at least one of the following conditions is satisfied: at least one of the first cells is removed from the first list, or a quantity of cells added to the first list after the first moment is greater than or equal to a second threshold, or first duration has elapsed since the first moment. According to the method, occurrence of a situation in which a terminal device cannot report a measurement report of the cell in the first list if a cell is added to the first list or removed from the first list when the quantity of cells in the first list is greater than or equal to the first threshold can be reduced, thereby improving effectiveness of a reported measurement report.

## Description

This application claims priorities to Chinese Patent Application No. 202210934392.3, filed with the China National Intellectual Property Administration on August 4, 2022 and entitled "METHOD AND COMMUNICATION APPARATUS FOR REPORTING MEASUREMENT REPORT, AND COMMUNICATION SYSTEM", and to Chinese Patent Application No. 202310155212.6, filed with the China National Intellectual Property Administration on February 15, 2023 and entitled "METHOD AND COMMUNICATION APPARATUS FOR REPORTING MEASUREMENT REPORT, AND COMMUNICATION SYSTEM", both of which are incorporated herein by reference in their entireties.

### TECHNICAL FIELD

This application relates to the communication field, and more specifically, to a method and a communication apparatus for reporting a measurement report, and a communication system.

### BACKGROUND

As a new type of aircraft, uncrewed aerial vehicles (Uncrewed Aerial Vehicle, UAV) have been widely used in various fields because of flexibility and convenience of the uncrewed aerial vehicles. To implement a communication function of the uncrewed aerial vehicle, the UAV may be used as a terminal device in a communication system to communicate with a base station. However, different from a common ground terminal, the UAV mainly flies above the base station, and is connected to the base station through an air interface. Signals received by the UAV are basically signals reflected from the ground and beam side lobe signals of the base station. Consequently, the signals received by the UAV are usually weak and have weak anti-interference capabilities. In addition, line of sight (line of sight, LOS) communication is mainly used between the UAV and the base station. It can be learned that, in a process in which the UAV communicates with the base station, excessive measurement reports are inevitably triggered.

For the foregoing problem, a corresponding mechanism for reporting a cell measurement report by the UAV is provided in a long term evolution (long term evolution, LTE) technology: Cells that can satisfy a condition of triggering a measurement event (for example, an event A3 or an event A4) in time to trigger (time to trigger, TTT) are arranged in a trigger cell list, and a threshold N of a quantity of cells in the list is preconfigured for the list, where N is a positive integer greater than or equal to 2. When the quantity of cells arranged in the trigger cell list is equal to N, measurement reports of the N cells are reported to the base station, so that a quantity of measurement reports reported by the UAV to the base station is reduced, thereby reducing signaling overheads.

However, how to reduce the quantity of cell measurement reports sent by the UAV to the base station while there are less occurrence of a situation in which the base station cannot obtain a measurement report of a newly added cell in the trigger cell list is an urgent technical problem to be resolved.

### SUMMARY

Embodiments of this application provide a method and a communication apparatus for reporting a measurement report, and a communication system, to avoid occurrence of a situation in which a UAV cannot report a measurement report if a cell is added to a first list or removed from the first list when a quantity of cells in the foregoing trigger cell list is greater than or equal to N, thereby reducing occurrence of a UAV cell handover failure or a radio link failure.

According to a first aspect, a method for reporting a measurement report is provided. The method includes: reporting measurement reports of a plurality of first cells at a first moment, where the plurality of first cells are cells in a first list, the first list includes a cell whose measurement report is to be reported, and a quantity of cells in the first list is greater than or equal to a first threshold; and reporting a measurement report when at least one of the following conditions is satisfied: at least one of the first cells is removed from the first list, or a quantity of cells added to the first list after the first moment is greater than or equal to a second threshold, or first duration has elapsed since the first moment.

It should be understood that the plurality of first cells may be understood as at least one first cell.

For example, the reporting measurement reports of a plurality of first cells at a first moment may include the following three situations.

When the quantity of cells in the first list is equal to the first threshold, the foregoing mechanism for reporting a cell measurement report by the UAV in LTE is still used to report the measurement reports.

When the quantity of cells in the first list is equal to the first threshold, and at least one of the first cells is removed from the first list, the measurement reports are reported based on the reporting mechanism provided in the foregoing method.

When the quantity of cells in the first list is greater than the first threshold and at least one of the foregoing conditions is satisfied, the measurement reports are reported based on the reporting mechanism provided in the foregoing method.

For example, the foregoing method is applicable to the UAV.

For example, the first list may be the foregoing trigger cell list, and the first threshold may be a threshold of the quantity of cells in the list.

For example, identification information of a cell, for example, a cell ID, may be added to the first list. Therefore, the first list may include identification information of the cell whose measurement report is to be reported. It should be understood that adding a specified cell to the first list or removing a specified cell from the first list may be adding identification information of the specified cell to the first list or removing identification information of the specified cell from the first list.

According to the foregoing technical solution, occurrence of a situation in which a terminal device cannot report a measurement report of the cell in the first list if a cell is added to the first list or removed from the first list when the quantity of cells in the first list is greater than or equal to the first threshold is avoided, thereby improving effectiveness of a reported measurement report.

With reference to the first aspect, in some implementations of the first aspect, the at least one condition further includes: a quantity of cells added to the first list in a first time period is greater than or equal to a third threshold, where the first time period is a time period that starts from the first moment and lasts for second duration, the third threshold is less than the second threshold, and the second duration is less than the first duration.

For example, it is assumed that the first duration is 1s, the second threshold is 3, the second duration is 500 ms, and the third threshold is 2. Timing starts from the first moment. Although less than 1s has elapsed since the first moment, and a quantity of newly added cells in the first list does not reach 3 after the first moment, two cells are added to the first list successively in short time of 500 ms. This indicates that a current network environment of the terminal device changes greatly. Therefore, the terminal device needs to report cell measurement reports in this case.

According to the foregoing technical solution, when a large quantity of cells are added to the first list in short time, even if these cells do not satisfy a trigger condition corresponding to the first threshold, it can represent that a current network environment of the terminal device changes greatly, so that reporting of a measurement report is triggered. This can further improve effectiveness of a reported measurement report.

With reference to the first aspect, in some implementations of the first aspect, the cells in the first list are cells that continuously trigger measurement events in time to trigger TTT.

It should be understood that the terminal device does not add a cell to the first list as long as the cell triggers a measurement event, but can add a cell to the first list only when the cell continuously triggers a measurement event in the TTT.

For example, the cells in the first list may be cells connected to the terminal device, or may be neighboring cells of cells connected to the terminal device, and may be added to the first list provided that the cells satisfy a condition of continuously triggering a measurement event in the TTT.

For example, the measurement event includes events A1 to A5, H1, and H2.

The event A1 indicates that signal quality of a serving cell is higher than a specific threshold. When an event satisfying this condition is reported, a base station may be indicated to stop measurement.

The event A2 indicates that signal quality of a serving cell is lower than a specific threshold. When an event satisfying this condition is reported, a base station may be indicated to start measurement, because an operation such as cell handover may occur after the event A2 occurs.

The event A3 indicates that signal quality of a neighboring cell is higher than signal quality of a serving cell. When an event satisfying this condition is reported, a source base station initiates a handover request. Event A3-based cell handover is coverage-based handover.

The event A4 indicates that signal quality of a neighboring cell is higher than a specified threshold. When an event satisfying this condition is reported, a source base station initiates a handover request.

The event A5 indicates that signal quality of a serving cell is lower than a specified threshold and signal quality of a neighboring cell is higher than a specified threshold. When an event satisfying this condition is reported, a base station can support a cell handover decision based on the event.

The event H1 indicates that a height of a terminal device in the air, for example, a UAV, is greater than a specific threshold.

The event H2 indicates that a height of a terminal device in the air, for example, a UAV, is less than a specific threshold.

With reference to the first aspect, in some implementations of the first aspect, the reporting a measurement report includes: reporting measurement reports of all cells in the first list.

For example, a manner of the reporting a measurement report may be referred to as full-list reporting.

With reference to the first aspect, in some implementations of the first aspect, the reporting a measurement report includes: reporting a measurement report of a cell that has not been reported in the first list.

For example, a manner of the reporting a measurement report may be referred to as differential reporting. The measurement report of the cell that has not been reported may be a measurement report of a cell added or removed related to a first list reported once, or may be a measurement report of a cell added or removed related to a first list at a moment before the first moment.

For example, the differential reporting is reporting a measurement report of a cell added or removed related to a first list reported last time. It is assumed that the first threshold is equal to 4. In a process of reporting measurement reports last time, a cell 1, a cell 2, a cell 3, and a cell 4 in the first list are reported. After the reporting, a cell 5 is added to the first list. In this case, because the cell 1 is removed from the first list, based on a mechanism of the differential reporting, the terminal device may report measurement reports of the cell 1 and the cell 5 in the first list. For the removed cell 1, related information of the cell 1 may be carried in a release node list (ToReleaseList) in the measurement report, to notify a network device that a connection between the terminal device and the cell 1 is released. For the newly added cell 5, related information of the cell 5 may be carried in an addition and modification node list (ToAddModList) in the measurement report, to notify the network device of a signal status between the terminal device and the cell 5.

According to the foregoing technical solution, after reporting is triggered, a measurement report of a cell that has not been reported in the first list can be sifted out, so that reporting of repeated measurement reports can be reduced, to reduce signaling overheads caused by reporting of measurement reports.

With reference to the first aspect, in some implementations of the first aspect, the first threshold, the first duration, the second threshold, the second duration, and the third threshold are delivered by the network device.

For example, the network device may be a base station.

For example, the network device may dynamically configure the foregoing parameters based on a received measurement report, so that the terminal device can dynamically adjust the foregoing reporting mechanism. According to the technical solution, effectiveness of a reported measurement report is improved, and flexibility of reporting a measurement report by the terminal device is further improved.

With reference to the first aspect, in some implementations of the first aspect, the first list includes a second cell. The second cell is a cell whose measurement report has not been reported. When the second cell is removed from the first list, reporting of a measurement report is not triggered.

According to the foregoing technical solution, after a cell that has not been reported is removed from the first list, reporting of a measurement report is not triggered, thereby helping reduce signaling overheads caused by reporting of measurement reports.

With reference to the first aspect, in some implementations of the first aspect, the second cell is removed from the first list when at least one of the following situations occurs: signal quality of the second cell is continuously lower in a third time period than a fifth threshold used for triggering a measurement event, or a measurement report-related parameter in a report configuration of the terminal device is reconfigured, or the first threshold is reconfigured.

For example, the fifth threshold may also be referred to as a trigger threshold. When the signal quality of the second cell is continuously higher than or equal to the fifth threshold in the third time period, the second cell is not removed from the first list.

For example, a time length of the third time period may be a time length of the TTT.

With reference to the first aspect, in some implementations of the first aspect, the at least one condition further includes: a first quantity is greater than or equal to a fourth threshold, where the first quantity is a quantity of first cells removed from the first list.

For example, the first quantity may be determined by using a counter.

According to the foregoing technical solution, a quantity of measurement reports reported by the terminal device is reduced, thereby reducing signaling overheads.

With reference to the first aspect, in some implementations of the first aspect, the fourth threshold is configured through preconfiguration or network configuration.

According to the foregoing technical solution, the fourth threshold can be configured in two manners, thereby increasing flexibility of the solution.

With reference to the first aspect, in some implementations of the first aspect, after the reporting a measurement report, the first quantity is set to zero, and/or when the fourth threshold is reconfigured, the first quantity is set to zero.

For example, the fourth threshold may be reconfigured in a value updating manner, or the fourth threshold may be reconfigured in a value overwriting manner.

For example, after the fourth threshold is reconfigured, the first quantity may be immediately set to zero, or may be set to zero after a special event is triggered. For example, the first quantity is set to zero after corresponding indication information or feedback information for reconfiguring the fourth threshold is received.

According to the foregoing technical solution, an operation of reporting a measurement report can be triggered more properly. This helps control a quantity of to-be-reported measurement reports.

With reference to the first aspect, in some implementations of the first aspect, when the first threshold is not reconfigured, and/or in a second time period that starts from the first moment and lasts for third duration, a third cell is removed from the first list K times, where the third cell is one of the plurality of first cells, and the first quantity is accumulated once, where K is greater than 1.

For example, the third duration may be preconfigured by the network device, or may be determined by the terminal device.

According to the foregoing technical solution, reporting of a measurement report triggered when a same cell is repeatedly added to and removed from the first list can be effectively reduced, thereby reducing signaling overheads caused by reporting of measurement reports.

According to a second aspect, a communication apparatus for reporting a measurement report is provided. The apparatus includes: a reporting unit, configured to report measurement reports of a plurality of first cells at a first moment, where the plurality of first cells are cells in a first list, the first list includes a cell whose measurement report is to be reported, and a quantity of cells in the first list is greater than or equal to a first threshold; and report a measurement report when at least one of the following conditions is satisfied: at least one of the first cells is removed from the first list, or a quantity of cells added to the first list after the first moment is greater than or equal to a second threshold, or first duration has elapsed since the first moment.

According to the foregoing technical solution, occurrence of a situation in which a terminal device cannot report a measurement report of the cell in the first list if a cell is added to the first list or removed from the first list when the quantity of cells in the first list is greater than or equal to the first threshold is avoided, thereby improving effectiveness of a reported measurement report.

With reference to the second aspect, in some implementations of the second aspect, the at least one condition further includes: a quantity of cells added to the first list in a first time period is greater than or equal to a third threshold, where the first time period is a time period that starts from the first moment and lasts for second duration, the third threshold is less than the second threshold, and the second duration is less than the first duration.

According to the foregoing technical solution, when a large quantity of cells are added to the first list in short time, even if these cells do not satisfy a trigger condition corresponding to the first threshold, it can represent that a current network environment of the terminal device changes greatly, so that reporting of a measurement report is triggered. This can further improve effectiveness of a reported measurement report.

With reference to the second aspect, in some implementations of the second aspect, the cells in the first list are cells that continuously trigger measurement events in time to trigger TTT.

With reference to the second aspect, in some implementations of the second aspect, when at least one of the foregoing conditions is satisfied, the reporting unit is specifically configured to report measurement reports of all cells in the first list.

With reference to the second aspect, in some implementations of the second aspect, when at least one of the foregoing conditions is satisfied, the reporting unit is specifically configured to report a measurement report of a cell that has not been reported in the first list.

According to the foregoing technical solution, after reporting is triggered, only a measurement report of a cell that has not been reported in the list is reported, so that reporting of repeated measurement reports can be avoided, to reduce signaling overheads caused by reporting of measurement reports.

With reference to the second aspect, in some implementations of the second aspect, the apparatus further includes a receiving unit, configured to receive the first threshold, the first duration, the second threshold, the second duration, and the third threshold that are sent by a network device.

With reference to the second aspect, in some implementations of the second aspect, the first list includes a second cell. The second cell is a cell whose measurement report has not been reported. The reporting unit is further configured to: when the second cell is removed from the first list, skip triggering reporting of a measurement report.

According to the foregoing technical solution, after a cell that has not been reported is removed from the first list, reporting of a measurement report is not triggered, thereby helping reduce signaling overheads caused by reporting of measurement reports.

With reference to the second aspect, in some implementations of the second aspect, the apparatus further includes: an operating unit, configured to remove the second cell from the first list when at least one of the following situations occurs: signal quality of the second cell is continuously lower in a third time period than a fifth threshold used for triggering a measurement event, or a measurement report-related parameter in a report configuration of the terminal device is reconfigured, or the first threshold is reconfigured.

With reference to the second aspect, in some implementations of the second aspect, the at least one condition further includes: a first quantity is greater than or equal to a fourth threshold, where the first quantity is a quantity of first cells removed from the first list.

According to the foregoing technical solution, a quantity of measurement reports reported by the terminal device is reduced, thereby reducing signaling overheads.

With reference to the second aspect, in some implementations of the second aspect, the fourth threshold is configured through preconfiguration or network configuration.

According to the foregoing technical solution, the fourth threshold can be configured in two manners, thereby increasing flexibility of the solution.

With reference to the second aspect, in some implementations of the second aspect, after the reporting a measurement report, the first quantity is set to zero, and/or when the fourth threshold is reconfigured, the first quantity is set to zero.

According to the foregoing technical solution, an operation of reporting a measurement report can be triggered more properly. This helps control a quantity of to-be-reported measurement reports.

With reference to the second aspect, in some implementations of the second aspect, when the first threshold is not reconfigured, and/or in a second time period that starts from the first moment and lasts for third duration, a third cell is removed from the first list K times, where the third cell is one of the plurality of first cells. The reporting unit is further configured to accumulate the first quantity once, where K is greater than 1.

According to the foregoing technical solution, reporting of a measurement report triggered when a same cell is repeatedly added to and removed from the first list can be effectively reduced, thereby reducing signaling overheads caused by reporting of measurement reports.

According to a third aspect, a network device is provided. The network device includes: a sending unit, configured to send a first threshold, first duration, a second threshold, second duration, and a third threshold to a terminal device, so that the terminal device can report measurement reports of a plurality of first cells at a first moment, where the plurality of first cells are cells in a first list, the first list includes a cell whose measurement report is to be reported, and a quantity of cells in the first list is greater than or equal to the first threshold. In addition, the terminal device reports a measurement report when at least one of the following conditions is satisfied: at least one of the first cells is removed from the first list, or a quantity of cells added to the first list after the first moment is greater than or equal to the second threshold, or the first duration has elapsed since the first moment, or a quantity of cells added to the first list in a first time period is greater than or equal to the third threshold, where the first time period is a time period that starts from the first moment and lasts for the second duration, the third threshold is less than the second threshold, and the second duration is less than the first duration.

According to a fourth aspect, an apparatus for reporting a measurement report is provided. The apparatus includes: a memory, configured to store computer instructions; and a processor, configured to execute the computer instructions stored in the memory, to enable the apparatus to perform the method in any one of the possible implementations in method design of the first aspect.

According to a fifth aspect, a computer-readable storage medium is provided, and stores a computer program or instructions. The computer program or the instructions are used for implementing the method in any one of the possible implementations in method design of the first aspect.

According to a sixth aspect, a computer program product is provided. The computer program product includes a computer program or instructions. When the computer program is executed or the instructions are executed by a computer, the apparatus is enabled to perform the method in any one of the possible implementations in method design of the first aspect.

According to a seventh aspect, a chip is provided, including a processor. The processor is configured to perform the method in any one of the possible implementations in method design of the first aspect.

For example, the chip may be a baseband chip.

According to an eighth aspect, an uncrewed aerial vehicle is provided. The uncrewed aerial vehicle includes the apparatus in any one of the possible implementations in method design of the second aspect.

According to a ninth aspect, a method for reporting a measurement report is provided. The method includes: when a second cell is removed from a first list, skipping triggering reporting of a measurement report, where the first list includes a cell whose measurement report is to be reported, and the second cell is a cell, in the first list, whose measurement report has not been reported.

According to the foregoing technical solution, after a cell that has not been reported is removed from the first list, reporting of a measurement report is not triggered, thereby helping reduce signaling overheads caused by reporting of measurement reports.

With reference to the ninth aspect, in some implementations of the ninth aspect, the second cell is removed from the first list when at least one of the following situations occurs: signal quality of the second cell is continuously lower in a third time period than a fifth threshold used for triggering a measurement event, or a measurement report-related parameter in a report configuration of a terminal device is reconfigured.

For example, the fifth threshold may also be referred to as a trigger threshold. When the signal quality of the second cell is continuously higher than or equal to the fifth threshold in the third time period, the second cell is not removed from the first list.

For example, a time length of the third time period may be a time length of the TTT.

With reference to the ninth aspect, in some implementations of the ninth aspect, a measurement report is reported when the following condition is satisfied: a first quantity is greater than or equal to a fourth threshold, where the first quantity is a quantity of first cells removed from the first list, and the first cell is a cell, in the first list, whose measurement report has been reported.

For example, the first quantity may be determined by using a counter.

According to the foregoing technical solution, a quantity of measurement reports reported by the terminal device is reduced, thereby reducing signaling overheads.

With reference to the ninth aspect, in some implementations of the ninth aspect, the fourth threshold is configured through preconfiguration or network configuration.

According to the foregoing technical solution, the fourth threshold can be configured in two manners, thereby increasing flexibility of the solution.

With reference to the ninth aspect, in some implementations of the ninth aspect, after the reporting a measurement report, the first quantity is set to zero, and/or when the fourth threshold is reconfigured, the first quantity is set to zero.

For example, the fourth threshold may be reconfigured in a value updating manner, or the fourth threshold may be reconfigured in a value overwriting manner.

For example, after the fourth threshold is reconfigured, the first quantity may be immediately set to zero, or may be set to zero after a special event is triggered. For example, the first quantity is set to zero after corresponding indication information or feedback information for reconfiguring the fourth threshold is received.

According to the foregoing technical solution, an operation of reporting a measurement report can be triggered more properly. This helps control a quantity of to-be-reported measurement reports.

With reference to the ninth aspect, in some implementations of the ninth aspect, measurement reports of a plurality of fourth cells are reported at a first moment, where the plurality of fourth cells are cells in the first list, and a quantity of cells in the first list is greater than or equal to a first threshold. When the first threshold is not reconfigured, and/or in a second time period that starts from the first moment and lasts for third duration, a third cell is removed from the first list K times, where the third cell is one of the plurality of fourth cells, and the first quantity is accumulated once, where K is greater than 1.

It should be understood that the first cell in the meaning of the first quantity may be one of the plurality of fourth cells.

For example, the third duration may be preconfigured by the network device, or may be determined by the terminal device.

According to the foregoing technical solution, reporting of a measurement report triggered when a same cell is repeatedly added to and removed from the first list can be effectively reduced, thereby reducing signaling overheads caused by reporting of measurement reports.

According to a tenth aspect, an apparatus for reporting a measurement report is provided. The apparatus includes: a reporting unit, configured to: when a second cell is removed from a first list, skip triggering reporting of a measurement report, where the first list includes a cell whose measurement report is to be reported, and the second cell is a cell, in the first list, whose measurement report has not been reported.

According to the foregoing technical solution, after a cell that has not been reported is removed from the first list, reporting of a measurement report is not triggered, thereby helping reduce signaling overheads caused by reporting of measurement reports.

With reference to the tenth aspect, in some implementations of the tenth aspect, the apparatus further includes: an operating unit, configured to remove the second cell from the first list when at least one of the following situations occurs: signal quality of the second cell is continuously lower in a third time period than a fifth threshold used for triggering a measurement event, or a measurement report-related parameter in a report configuration of the terminal device is reconfigured.

With reference to the tenth aspect, in some implementations of the tenth aspect, a measurement report is reported when the following condition is satisfied: a first quantity is greater than or equal to a fourth threshold, where the first quantity is a quantity of first cells removed from the first list, and the first cell is a cell, in the first list, whose measurement report has been reported.

According to the foregoing technical solution, a quantity of measurement reports reported by the terminal device is reduced, thereby reducing signaling overheads.

With reference to the tenth aspect, in some implementations of the tenth aspect, the fourth threshold is configured through preconfiguration or network configuration.

According to the foregoing technical solution, the fourth threshold can be configured in two manners, thereby increasing flexibility of the solution.

With reference to the tenth aspect, in some implementations of the tenth aspect, after the reporting a measurement report, the first quantity is set to zero, and/or when the fourth threshold is reconfigured, the first quantity is set to zero.

According to the foregoing technical solution, an operation of reporting a measurement report can be triggered more properly. This helps control a quantity of to-be-reported measurement reports.

With reference to the tenth aspect, in some implementations of the tenth aspect, measurement reports of a plurality of fourth cells are reported at a first moment, where the plurality of fourth cells are cells in the first list, and a quantity of cells in the first list is greater than or equal to a first threshold. When the first threshold is not reconfigured, and/or in a second time period that starts from the first moment and lasts for third duration, a third cell is removed from the first list K times, where the third cell is one of the plurality of fourth cells, and the first quantity is accumulated once, where K is greater than 1.

It should be understood that the first cell in the meaning of the first quantity may be one of the plurality of fourth cells.

According to the foregoing technical solution, reporting of a measurement report triggered when a same cell is repeatedly added to and removed from the first list can be effectively reduced, thereby reducing signaling overheads caused by reporting of measurement reports.

### BRIEF DESCRIPTION OF DRAWINGS

FIG. 1 is an example of a communication system architecture applicable to an embodiment of this application;
FIG. 2 is a flowchart of a method for reporting a measurement report according to an embodiment of this application;
FIG. 3 is a flowchart of another method for reporting a measurement report according to an embodiment of this application;
FIG. 4(a) to FIG. 4(d) are a diagram of another method for reporting a measurement report according to an embodiment of this application;
FIG. 5 is a flowchart of another method for reporting a measurement report according to an embodiment of this application;
FIG. 6 is a diagram of another method for reporting a measurement report according to an embodiment of this application;
FIG. 7 is a flowchart of another method for reporting a measurement report according to an embodiment of this application;
FIG. 8 is a diagram of another method for reporting a measurement report according to an embodiment of this application;
FIG. 9 is a flowchart of another method for reporting a measurement report according to an embodiment of this application;
FIG. 10(a) and FIG. 10(b) are a diagram of another method for reporting a measurement report according to an embodiment of this application;
FIG. 11 is a flowchart of another method for reporting a measurement report according to an embodiment of this application;
FIG. 12 is a diagram of another method for reporting a measurement report according to an embodiment of this application;
FIG. 13 is a schematic block diagram of a communication apparatus 1300 for reporting a measurement report according to an embodiment of this application;
FIG. 14 is a flowchart of another method for reporting a measurement report according to an embodiment of this application; and
FIG. 15(a) and FIG. 15(b) are a diagram of another method for reporting a measurement report according to an embodiment of this application.

### DESCRIPTION OF EMBODIMENTS

The following describes technical solutions of embodiments in this application with reference to accompanying drawings.

The technical solutions in embodiments of this application are applicable to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, and future communication system.

To cope with challenges of a wireless broadband technology and maintain the leading position of a 3rd generation partnership project (3rd generation partnership project, 3GPP) network, the 3GPP standard group formulates a next generation mobile communication network architecture (next generation system), which is referred to as a 5G network architecture. The architecture not only supports access to a 5G core network (5G core network, 5GC) by using a wireless technology (such as LTE) defined by the 3GPP standard group, but also supports access to the 5GC by using a non-3GPP access technology through a non-3GPP interworking function (non-3GPP interworking function, N3IWF), a trusted non-3GPP gateway function (trusted non-3GPP gateway function, TNGF), a trusted WLAN interworking function (trusted WLAN interworking function, TWIF), or a next generation packet data gateway (next generation packet data gateway, NG-PDG). Core network functions are classified into a user plane network element function (user plane function, UPF) and a control plane network element function (control plane function, CPF). The UPF is mainly responsible for forwarding a group data packet, controlling quality of service (quality of service, QoS), collecting charging information, and the like. The CPF is mainly responsible for user registration authentication, mobility management, and delivery of a data packet forwarding policy, a QoS control policy, and the like to the UPF, and can be further divided into an access and mobility management function (access and mobility management function, AMF) and a session management function (session management function, SMF).

A core network device includes, for example, a mobility management entity (mobility management entity, MME) or a broadcast/multicast service center (broadcast multicast service center, BMSC), or may include a corresponding function entity in a 5G system, for example, a core network control plane (control plane, CP) or user plane (user plane, UP) network function, for example, an SMF or an AMF. The core network control plane may also be understood as a core network control plane function (control plane function, CPF) entity.

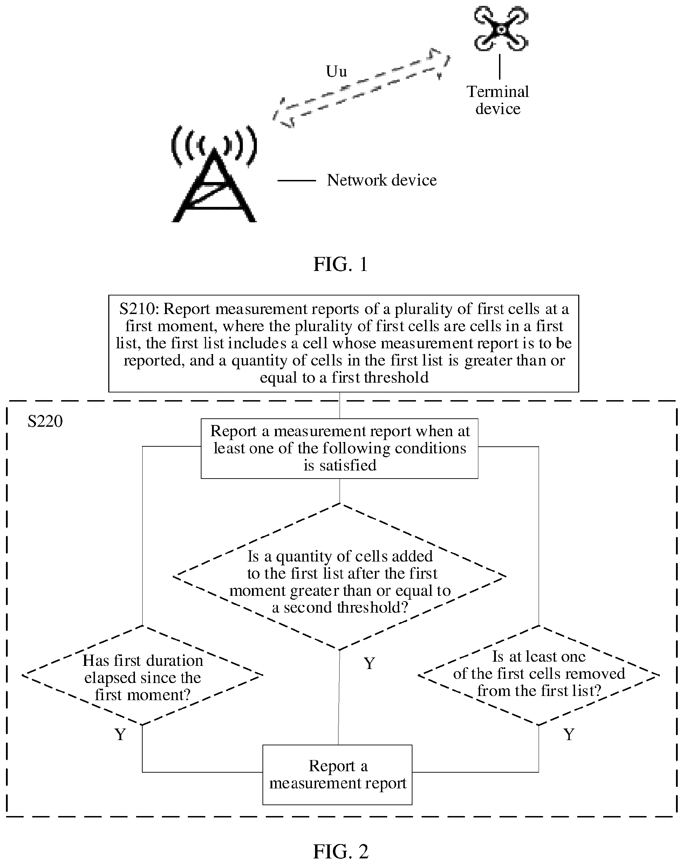

FIG. 1 is an example of a communication system architecture applicable to an embodiment of this application.

The communication system framework includes a terminal device and a network device. Functions of the terminal device and the network device are described below.

The terminal device may be referred to as a terminal (terminal), a terminal device unit (subscriber unit), a terminal device station, a terminal device agent, a terminal device apparatus, an access terminal, a terminal in V2X communication, a subscriber unit, user equipment (user equipment, UE), a subscriber station, a mobile station (mobile station, MS), a remote station, a remote terminal, a mobile device, a user terminal, a wireless communication device, a user agent, or a user apparatus.

The terminal device in embodiments of this application may alternatively be a mobile phone (mobile phone), a tablet computer (pad), a computer with a wireless transceiver function, a holographic projector, a video player, a virtual reality (virtual reality, VR) terminal, an augmented reality (augmented reality, AR) terminal, a wireless terminal in industrial control (industrial control), a tactile terminal device, a vehicle-mounted terminal device, a wireless terminal in self driving (self driving), a wireless terminal in telemedicine (remote medical), a wireless terminal in a smart grid (smart grid), a wireless terminal in transportation safety (transportation safety), a wireless terminal in transportation safety, a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, or another processing device connected to a wireless modem, a vehicle-mounted device, and a wearable device, a terminal in a 5G network, a terminal in a future evolved network, or the like.

The wearable device may also be referred to as a wearable intelligent device, and is a general term of wearable devices such as head-mounted XR glasses, gloves, watches, clothes, and shoes, that are intelligently designed and developed for daily wear by using a wearable technology. The wearable device is a portable device that can be directly worn on the body or integrated into clothes or an accessory of a user. The wearable device is not only a hardware device, but also implements a powerful function through software support, data exchange, and cloud interaction. In a broad sense, the wearable intelligent device includes full-featured and large-size devices that can implement all or some of functions without depending on smartphones, for example, smart watches or smart glasses, and include devices that are dedicated to only one type of application function and need to be used together with other devices such as smartphones, for example, various smart bands or smart jewelry for monitoring physical signs.

The terminal device in embodiments of this application may be used in an air scenario, and communicate with a base station. For example, the terminal device may be a UAV. For ease of understanding, the UAV is used as an example of the terminal device in embodiments of this application for description.

Network device: The network device in embodiments of this application may be a device configured to communicate with the terminal device. The network device may be a base station (base transceiver station, BTS) in a global system for mobile communications (global system for mobile communications, GSM) or code division multiple access (code division multiple access, CDMA), may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a scenario of a cloud radio access network (cloud radio access network, CRAN). Alternatively, the network device may be a relay station, an access point, a vehicle-mounted device, a wearable device, a network device in a 5G network, a network device in an evolved PLMN, or the like. This is not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not particularly limited in embodiments of this application, provided that a program that records code of the method provided in embodiments of this application can be run to perform communication according to the method provided in embodiments of this application. For example, the execution body of the method provided in embodiments of this application may be the terminal device or the network device, or a functional module that can invoke and execute the program in the terminal device or the network device.

An example in which the UAV is a terminal device and the base station is a network device is used. In the foregoing communication system, the UAV is connected to the base station via an air interface, to implement communication between the UAV and the base station. However, because the UAV mainly moves in the air, in other words, the UAV is flying above the base station, there is usually no obstacle between the UAV and the base station to shield a communication signal. Therefore, LOS communication is mainly used between the UAV and the base station, and the UAV can receive signals of a large quantity of base stations.

In a process of communication between the UAV and the base station, because the UAV moves at all time, quality of service of a serving cell for the UAV dynamically changes. To enable the base station to learn current quality of service of the serving cell of the UAV and quality of service of a neighboring cell of the serving cell, the UAV generates measurement reports/a measurement report of a serving cell and/or a neighboring cell that can satisfy a condition of triggering a measurement event, and reports the measurement reports/measurement report to the base station. After receiving the measurement report, the base station determines, based on a value of a related parameter included in the measurement report, whether the serving cell of the UAV needs to be adjusted, to implement load balancing in the communication system. Specifically, load balancing in the communication system may be implemented by using a redirection mechanism during cell handover, radio resource control (radio resource control, RRC) release, and absolute priorities for inter-frequency and inter-RAT.

For ease of understanding, the following describes the measurement event triggering mentioned in the foregoing embodiment of this application and a triggering mechanism of the measurement event triggering.

Before reporting of a measurement report is triggered, a measurement event needs to be triggered. Measurement events may mainly include events such as an event A1, an event A2, an event A3, an event A4, and an event A5, and an event H1 and an event H2 related to the UAV. Types of measurement that can be performed by the terminal device include, but are not limited to, intra-frequency measurement, inter-frequency measurement, and inter-RAT measurement. Based on these types of measurement, the terminal device implements measurement of the foregoing events. Further, parameters mainly measured by the terminal device include, but are not limited to, reference signal received power (reference signal received power, RSRP), a received signal strength indicator (received signal strength indicator, RSSI), and reference signal received quality (reference signal received quality, RSRQ). The RSRP indicates a linear average value of power of common reference signals that are of a cell and that are received by the terminal within measurement bandwidth, and reflects strength of wanted signals of the cell. The RSSI indicates a linear average value of power of all signals (including wanted and interference signals of a same frequency, adjacent-frequency interference signals, thermal noise, and the like) received by the terminal. The RSRQ indicates a ratio of X times the RSRP to the RSSI, that is, RSRQ=X*RSRP/RSSI, where X indicates a quantity of RBs included in measurement bandwidth of the RSSI, and can reflect relative strength between signals and interference. According to the foregoing mechanism for measuring the serving cell and the neighboring cell by the terminal device, the foregoing events A1 to A5, H1, and H2 can be measured.

The event A1 indicates that signal quality of the serving cell is higher than a specific threshold. When an event satisfying this condition is reported, the base station may be indicated to stop measurement.

The event A2 indicates that signal quality of the serving cell is lower than a specific threshold. When an event satisfying this condition is reported, the base station may be indicated to start measurement, because an operation such as cell handover may occur after the event A2 occurs.

The event A3 indicates that signal quality of the neighboring cell is higher than signal quality of the serving cell. When an event satisfying this condition is reported, a source base station initiates a handover request. Event A3-based cell handover is coverage-based handover.

The event A4 indicates that signal quality of the neighboring cell is higher than a specified threshold. When an event satisfying this condition is reported, a source base station initiates a handover request.

The event A5 indicates that signal quality of the serving cell is lower than a specified threshold and signal quality of the neighboring cell is higher than a specified threshold. When an event satisfying this condition is reported, a base station can support a cell handover decision based on the event.

The event H1 indicates that a height of a terminal device in the air, for example, a UAV, is greater than a specific threshold.

The event H2 indicates that a height of a terminal device in the air, for example, a UAV, is less than a specific threshold.

It should be understood that the type of measurement performed by the terminal device and triggering of the measurement event are both examples for description, and are not limited to the foregoing type of measurement and measurement event. In other words, as the communication system is upgraded, a newly added type of measurement and measurement event of the terminal device are also applicable to embodiments of this application.

It can be learned from the foregoing descriptions that measurement of the terminal device mainly refers to mobility measurement in a connected state, that is, connected state measurement. A measurement process mainly includes the following steps.

First, the base station sends a measurement configuration message to the terminal device through a measurement configuration information element carried in an RRC connection reconfiguration message.

It should be understood that this step mainly completes a work of delivering measurement control by the base station to the terminal device.

Then, the terminal device performs measurement based on the received measurement configuration message. After performing measurement and determining that a condition of triggering reporting of a measurement report is satisfied, the terminal device reports the measurement report to the base station. Content of the measurement report may include: a measurement number, a serving cell measurement result, a neighboring cell measurement result, and the like.

In some possible embodiments, a measurement reporting triggering mechanism includes, but is not limited to, event-triggered reporting and time-triggered periodic reporting.

In an example of a current communication system, the time-triggered periodic reporting mechanism is mainly used as a measurement reporting triggering mechanism for a ground terminal device. When an L3 filtering result of a cell always satisfies the condition of triggering a measurement event in TTT, for example, the foregoing events A1 to A5, H1, and H2, the terminal device adds identification information of the cell to a trigger cell list, and sends a measurement report of the cell in the trigger cell list.

For ease of description, in embodiments of this application, a cell added to the trigger cell list is referred to as a trigger cell. It should be understood that the trigger cell may be a serving cell of the terminal device, or may be a neighboring cell.

It can be learned from the descriptions of the foregoing embodiments that, because the UAV can receive signals of a large quantity of base stations, the UAV generates a large quantity of measurement reports based on signals of different base stations. If the UAV uploads all the measurement reports to the base stations, considerable signaling overheads are inevitably caused. Therefore, in R15 of 3GPP, a measurement report reporting mechanism for the UAV is enhanced.

Specifically, a measurement configuration message delivered by the base station to the UAV further carries a first threshold, where the first threshold is equal to N, and N is a positive integer greater than or equal to 2.

For ease of understanding, in embodiments of this application, the first threshold equal to N is denoted as a "first threshold N".

After the UAV generates the measurement report of the serving cell or the measurement report of the neighboring cell, and adds identification information of the cell to the trigger cell list, the UAV does not directly send the measurement report of the cell in the trigger cell list, but sends measurement reports of N cells to the base station when a quantity of trigger cells added to the trigger cell list is equal to N. This mechanism is applicable to the events A3, A4, and A5.

When a cell in the N cells cannot satisfy the condition of triggering a measurement event due to movement of the UAV, identification information of the cell needs to be removed from the trigger cell list.

In some possible embodiments, if there is a new cell that can trigger a measurement event, identification information of the cell needs to be added to the trigger cell list, so that the quantity of trigger cells added to the trigger cell list is equal to N again, and then measurement reports of the N cells are sent to the base station, or only a measurement report of the cell newly added to the trigger cell list is sent to the base station.

In some possible embodiments, after the measurement reports of the N cells are reported, if a new cell satisfies the condition of triggering a measurement event, identification information of the cell may be added to the trigger cell list. However, if none of the N cells is removed from the trigger cell list, the UAV cannot send, to the base station, a measurement report of a subsequent cell satisfying the condition of triggering a measurement event. Consequently, it is difficult for the base station to receive a latest measurement report, and a cell handover failure of the uncrewed aerial vehicle, a radio link failure (radio link failure, RLF), or the like may be caused. Currently, no solution is provided for this situation.

In view of this, an embodiment of this application provides a method for reporting a measurement report, to improve the foregoing mechanism for reporting a cell measurement report by the UAV in LTE, and add a mechanism for reporting a cell measurement report by the terminal device, so as to increase an opportunity for reporting a measurement report of a cell subsequently added to the trigger cell list to the network device, so that the network device has more opportunities to receive a latest measurement report. When the terminal device is the UAV and the network device is the base station, occurrence of a cell handover failure of an uncrewed aerial vehicle or a radio link failure can be reduced.

FIG. 2 is a flowchart of a method for reporting a measurement report according to an embodiment of this application. The method is applied to a terminal device. Further, the terminal device may be a UAV.

S210: Report measurement reports of a plurality of first cells at a first moment, where the plurality of first cells are cells in a first list, the first list includes a cell whose measurement report is to be reported, and a quantity of cells in the first list is greater than or equal to a first threshold.

It should be understood that the first list is the trigger cell list. In addition, the plurality of first cells may be understood as at least one first cell.

In some possible embodiments, for a process of reporting the measurement reports of the plurality of first cells at the first moment, the foregoing mechanism for reporting a cell measurement report by the UAV in LTE may be still used to report the measurement reports of the plurality of first cells. For example, a quantity of the plurality of first cells added to the first list is equal to the first threshold delivered by a network device, so that the terminal device reports the measurement reports of the plurality of first cells. In addition, for the process of reporting the measurement reports of the plurality of first cells at the first moment, a mechanism for reporting a measurement report provided in this embodiment of this application may alternatively be used. For a specific reporting mechanism, refer to subsequent related descriptions.

S220: Determine to report a measurement report based on one or more of removal information of a first cell in the first list, cell addition information, or reporting time information of a cell measurement report.

The removal information of the first cell may indicate that at least one of the first cells is removed from the first list. The cell addition information may indicate that a quantity of cells added to the first list after the first moment is greater than or equal to a second threshold. The reporting time information of a cell measurement report may indicate that first duration has elapsed since the first moment at which the measurement reports of the plurality of first cells are reported.

In some possible embodiments, a second cell is added to the first list after the first moment. However, the second cell is removed before the at least one condition is satisfied. Therefore, when the at least one condition is satisfied subsequently, a measurement report of the second cell does not need to be reported. It should be understood that, because the terminal device has not reported the measurement report of the second cell before, and the second cell is subsequently removed from the first list, it can be learned that for the network device, the measurement report of the second cell is less effective, or even has no effectiveness. Therefore, it is unnecessary to report the measurement report of the second cell to the network device. Therefore, signaling overheads caused by reporting of measurement reports between the terminal device and the network device can be reduced.

For ease of description, in this embodiment of this application, that "at least one of the first cells is removed from the first list" indicated by the removal information of the first cell is denoted as a condition 1.

That "first duration has elapsed since the first moment" indicated by the cell addition information is denoted as a condition 2.

That "a quantity of cells added to the first list after the first moment is greater than or equal to a first threshold" indicated by the reporting time information of a cell measurement report is denoted as a condition 3.

In some possible embodiments, each of the foregoing conditions corresponds to a mechanism for triggering the terminal device to report a cell measurement report. In addition, each condition can be used in combination with another condition. For example, the condition 1 is combined with the condition 2, the condition 2 is combined with the condition 3, or the condition 1 is combined with the condition 2 and the condition 3. When any one of the conditions that are combined for use is satisfied, the terminal device is triggered to report the measurement report.

According to the foregoing technical solution, a quantity of cell measurement reports that are sent by the terminal device to the network device is effectively reduced, and an opportunity for reporting a latest cell measurement report can be increased, thereby reducing occurrence of a situation in which the network device cannot obtain a measurement report of a newly added cell in the first list, and improving effectiveness of a reported measurement report.

In some possible embodiments, embodiments of this application further provide a condition of triggering reporting. The condition is as follows: A quantity of cells added to the first list in a first time period is greater than or equal to a third threshold, where the first time period is a time period that starts from the first moment and lasts for second duration.

The third threshold is less than the second threshold, and the second duration is less than the first duration.

That the condition 2 is combined with the condition 3 is used as an example. It is assumed that the first duration is 1s, the second threshold is 3, the second duration is 500 ms, and the third threshold is 2. Timing starts from the first moment. Although less than 1s has elapsed since the first moment, and a quantity of newly added cells in the first list does not reach 3 after the first moment, two cells are added to the first list successively in short time of 500 ms. This indicates that a current network environment of the terminal device changes greatly. Therefore, the terminal device needs to report cell measurement reports in this case.

According to the foregoing technical solution, when a large quantity of cells are added to the first list in short time, even if these cells do not satisfy a trigger condition corresponding to the second threshold, it can represent that a current network environment of the terminal device changes greatly, so that reporting of a measurement report is triggered. This can further improve effectiveness of a reported measurement report.

Similarly, that "a quantity of cells added to the first list in a first time period is greater than or equal to a third threshold, where the first time period is a time period that starts from the first moment and lasts for second duration" in the foregoing condition may be denoted as a condition 4. The condition 4 may be included in the cell addition information, or may be included in the reporting time information of a cell measurement report, or may be included in both of the two pieces of information.

In some possible embodiments, the terminal device does not always determine, based on the first duration, the first threshold, or the like, whether to report the measurement report. In this process, the network device may adjust the foregoing parameters at any time, and re-deliver the measurement configuration message.

According to the foregoing technical solution, a parameter related to a condition of triggering reporting of a measurement report is adjusted at any time to flexibly adjust a mechanism for reporting a measurement report. This improves effectiveness of a reported measurement report, and further improves flexibility of reporting the measurement report by the terminal device.

The following describes in detail, by using an example, the method for reporting a measurement report provided in embodiments of this application with reference to the foregoing conditions.

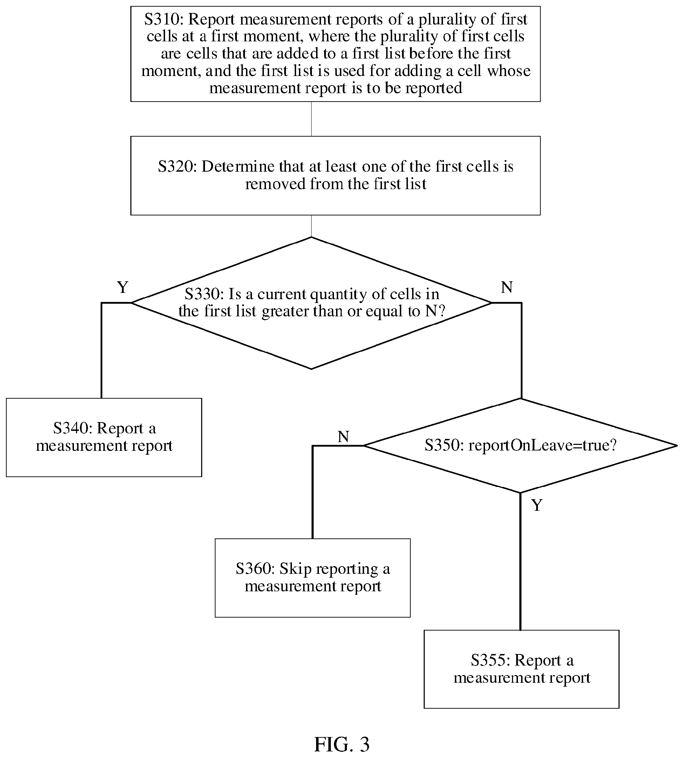

FIG. 3 is a flowchart of another method for reporting a measurement report according to an embodiment of this application. The method is applied to a terminal device. Further, the terminal device may be a UAV.

For ease of description, this mechanism for reporting a measurement report is a mechanism 1 in this application.

S310: Report measurement reports of a plurality of first cells at a first moment, where the plurality of first cells are cells that are added to a first list before the first moment, and the first list is used for adding a cell whose measurement report is to be reported.

In some possible embodiments, for a process of reporting the measurement reports of the plurality of first cells at the first moment, the foregoing mechanism for reporting a cell measurement report by a UAV in LTE may be used to report the measurement reports of the plurality of first cells. For example, a quantity of the plurality of first cells added to the first list is equal to the first threshold delivered by a network device, so that the terminal device reports the measurement reports of the plurality of first cells. In addition, for the process of reporting the measurement reports of the plurality of first cells at the first moment, a mechanism for reporting a measurement report provided in this embodiment of this application may alternatively be used.

S320: Determine that at least one of the first cells is removed from the first list.

In some possible embodiments, because a location of the terminal device changes, at least one first cell that has been added to the first list cannot satisfy a condition of triggering a corresponding measurement event, and therefore, related information of the at least one first cell needs to be removed from the first list. However, the location change of the terminal device generally causes only one first cell not to satisfy the condition of triggering the corresponding measurement event, and rarely causes a plurality of first cells not to satisfy the condition of triggering the corresponding measurement event at the same time.

S330: Determine whether a current quantity of cells in the first list is greater than or equal to a first threshold N. If the quantity of cells is greater than or equal to N, S340 is performed; or if the quantity of cells is less than N, S350 is performed.

S340: Report a measurement report.

In some possible embodiments, one of the following two manners may be selected to report a cell measurement report.
(1) Full-list reporting: Measurement reports of all cells in the current first list are reported.
   In an embodiment, N is equal to 4, and in a process of reporting measurement reports last time, a cell 1, a cell 2, a cell 3, and a cell 4 in the first list are reported. After the reporting, a cell 5 is added to the first list. In this case, because the cell 1 is removed from the first list, based on a mechanism of the full-list reporting, the terminal device may report measurement reports of the cell 2, the cell 3, the cell 4, and the cell 5 in the first list.
(2) Differential reporting: A measurement report of a cell that has not been reported in the current first list is reported.

In some possible embodiments, the measurement report of the cell that has not been reported may be a measurement report of a cell added or removed related to a first list reported once, or may be a measurement report of a cell added or removed related to a first list at a moment before the first moment. This is not limited in embodiments of this application.

For example, a measurement report of a cell added or removed related to a first list reported last time is reported. N is equal to 4. In a process of reporting measurement reports last time, a cell 1, a cell 2, a cell 3, and a cell 4 in the first list are reported. After the reporting, a cell 5 is added to the first list. In this case, because the cell 1 is removed from the first list, based on a mechanism of the differential reporting, the terminal device may report measurement reports of the cell 1 and the cell 5 in the first list. For the removed cell 1, related information of the cell 1 may be carried in ToReleaseList in the measurement report, to notify the network device that a connection between the terminal device and the cell 1 is released. For the newly added cell 5, related information of the cell 5 may be carried in ToAddModList in the measurement report, to notify the network device of a signal status between the terminal device and the cell 5.

S350: Determine a reportOnLeave (reportOnLeave) parameter value carried in a measurement configuration message delivered by the network device. If reportOnLeave is true, S355 is performed; or if reportOnLeave is false, S360 is performed.

It should be understood that reportOnLeave is mainly applied to a corresponding mechanism in which reporting of a measurement report is triggered when the quantity of cells in the first list is less than N.

S355: Report a measurement report.

It should be understood that when reportOnLeave is true, even if a quantity of cells added to the first list is less than N, after at least one first cell is removed from the first list, an operation of reporting a measurement report of a cell by the terminal device to the network device is triggered.

In some possible embodiments, one of the foregoing full-list reporting and differential reporting may be selected to report the measurement report of the cell.

S360: Skip reporting a measurement report.

It should be understood that when reportOnLeave is false, because the quantity of cells added to the first list is less than N, after at least one first cell is removed from the first list, an operation of reporting a measurement report of a cell by the terminal device to the network device is not triggered. The operation of reporting a measurement report of a cell by the terminal device to the network device is triggered only when the quantity of cells in the first list reaches N again.

According to the foregoing technical solution, a quantity of cell measurement reports that are sent by the terminal device to the network device can be effectively reduced, and occurrence of a situation in which the network device cannot obtain a measurement report of a newly added cell in the first list is also reduced, thereby improving effectiveness of a measurement report received by the network device.

In some possible embodiments, because the network device has a relatively high requirement on effectiveness of the measurement events A3 and A5, the terminal device may use, according to the foregoing technical solution, a corresponding measurement report reporting mechanism for cells that trigger the measurement events A3 and A5.

The following describes in detail, by using an example, the method for reporting a measurement report provided in the foregoing embodiments of this application.

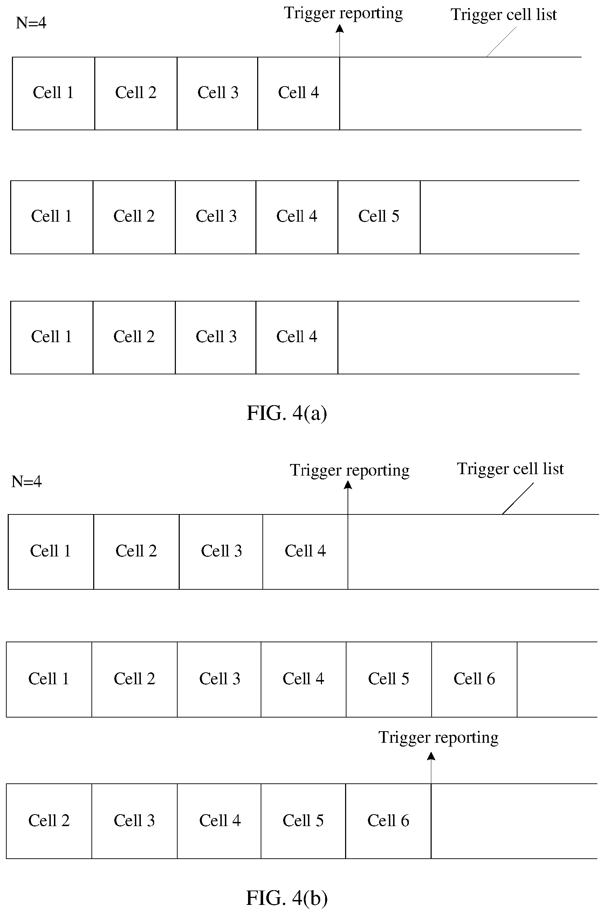

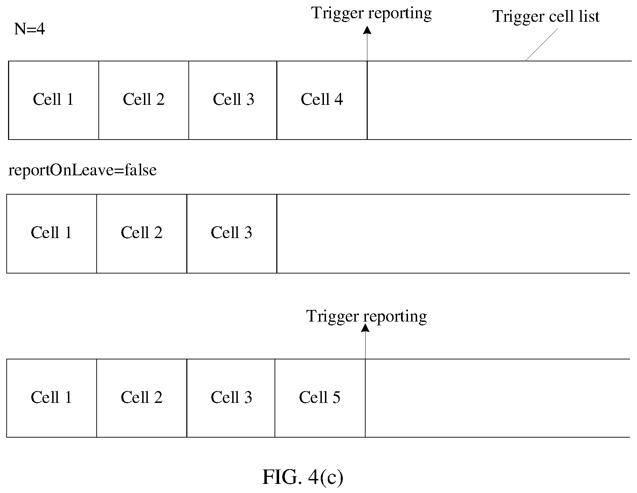

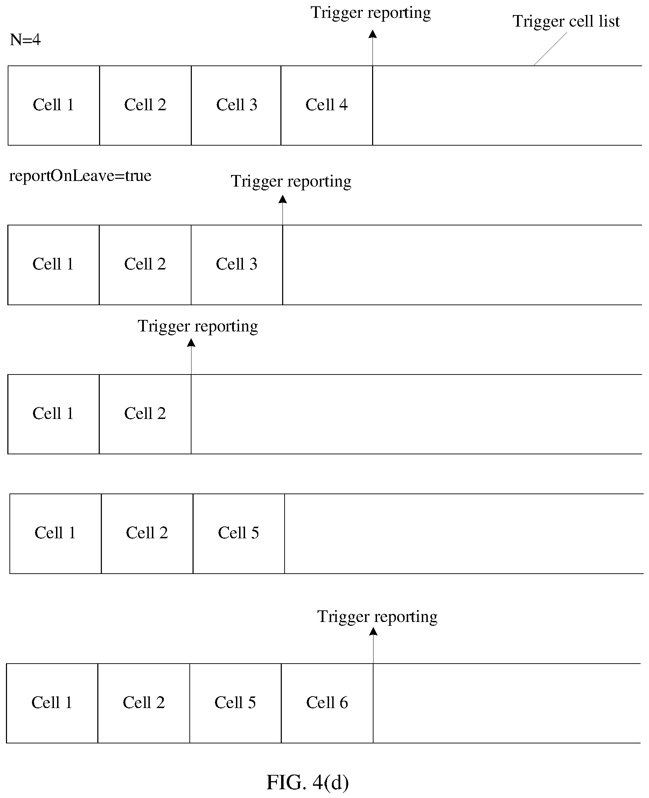

FIG. 4 is a diagram of another method for reporting a measurement report according to an embodiment of this application.

As shown in FIG. 4(a), a first threshold N=4. During movement of a terminal device, a cell 1, a cell 2, a cell 3, and a cell 4 are successively added to a first list. In this case, because a quantity of cells added to the first list reaches 4, the terminal device reports measurement reports of all cells in the first list in this case to a network device for the first time.

During subsequent movement of the terminal device, a cell 5 is also added to the first list. However, in this case, the terminal device is not triggered to perform a related operation of reporting a measurement report.

During subsequent movement of the terminal device, the cell 5 no longer satisfies a trigger condition of a measurement event. Therefore, the cell 5 needs to be removed from the first list. Because a measurement report of the cell 5 has not been reported before, in this case, the terminal device is not triggered to perform the related operation of reporting a measurement report.

It can be learned that, for the network device, the measurement report of the cell 5 is less effective, or even has no effectiveness. Therefore, it is unnecessary to report a measurement report of a first cell to the network device. Therefore, signaling overheads caused by reporting of measurement reports between the terminal device and the network device can be reduced.

As shown in FIG. 4(b), a first threshold N=4. During movement of a terminal device, a cell 1, a cell 2, a cell 3, and a cell 4 are successively added to a first list. In this case, because a quantity of cells added to the first list reaches 4, the terminal device reports measurement reports of all cells in the first list in this case to a network device for the first time.

During subsequent movement of the terminal device, a cell 5 and a cell 6 are successively added to the first list. However, in this case, the terminal device is not triggered to perform a related operation of reporting a measurement report.

During subsequent movement of the terminal device, the cell 1 no longer satisfies a trigger condition of a measurement event. Therefore, the cell 1 needs to be removed from the first list. Because the measurement report of the cell 1 has been reported before, in this case, the terminal device is triggered to perform the related operation of reporting a measurement report.

It can be learned that an action of removing the cell 1 from the first list triggers the terminal device to perform the related operation of reporting a measurement report. In this process, the terminal device may report, to the network device, measurement reports of the cell 5 and the cell 6 that are subsequently added to the first list. Even if the quantity of cells added to the first list is greater than N, the network device can still receive the measurement reports of the cell 5 and the cell 6. This reduces signaling overheads caused by reporting of measurement reports between the terminal device and the network device, and can also increase a quantity of measurement reports of newly added cells in the first list that are obtained by a base station.

As shown in FIG. 4(c), a first threshold N=4. During movement of a terminal device, a cell 1, a cell 2, a cell 3, and a cell 4 are successively added to a first list. In this case, because a quantity of cells added to the first list reaches 4, the terminal device reports measurement reports of all cells in the first list in this case to a network device for the first time.

During subsequent movement of the terminal device, the cell 4 no longer satisfies a trigger condition of a measurement event. Therefore, the cell 4 needs to be removed from the first list. In this case, because the quantity of cells added to the first list is less than 4, and it is determined that reportOnLeave=false, the terminal device cannot be triggered to perform a related operation of reporting a measurement report.

During subsequent movement of the terminal device, a cell 5 is added to the first list. In this case, because the quantity of cells added to the first list reaches 4, the terminal device can be triggered to perform the related operation of reporting a measurement report.

As shown in FIG. 4(d), a first threshold N=4. During movement of a terminal device, a cell 1, a cell 2, a cell 3, and a cell 4 are successively added to a first list. In this case, because a quantity of cells added to the first list reaches 4, the terminal device reports measurement reports of all cells in the first list in this case to a network device for the first time.

During subsequent movement of the terminal device, the cell 4 no longer satisfies a trigger condition of a measurement event. Therefore, the cell 4 needs to be removed from the first list. In this case, because the quantity of cells added to the first list is less than 4, and it is determined that reportOnLeave=true, the terminal device can be triggered to perform a related operation of reporting a measurement report.

During subsequent movement of the terminal device, the cell 3 no longer satisfies a trigger condition of a measurement event. Therefore, the cell 3 needs to be removed from the first list. In this case, because the quantity of cells added to the first list is less than 3, and it is determined that reportOnLeave=true, the terminal device can be triggered to perform the related operation of reporting a measurement report.

During subsequent movement of the terminal device, a cell 5 is added to the first list. However, in this case, because the quantity of cells added to the first list is less than 4, the terminal device cannot be triggered to perform the related operation of reporting a measurement report.

It can be learned from the descriptions of the foregoing technical solution that, although the mechanism 1 increases an opportunity for the network device to receive a latest cell measurement report of the terminal device to some extent, in some scenarios, a first threshold N=4, and during movement of the terminal device, a cell 1, a cell 2, a cell 3, and a cell 4 are successively added to a first list. In this case, a cell 5 is added to the first list. Compared with a current serving cell of the terminal device, the cell 5 is a cell (which triggers a measurement event A4) whose signal quality is higher than a specific threshold, and the terminal device may need to be handed over from the current serving cell to the cell 5. However, because none of the cells 1 to 4 is removed from the first list, the network device cannot receive a measurement report of the cell 5. As a result, the terminal device misses an opportunity to be handed over to the cell 5 with better signal quality. To avoid this problem, on the basis of the mechanism 1 provided in the foregoing embodiment, the following mechanism for triggering reporting of a measurement report is further added.

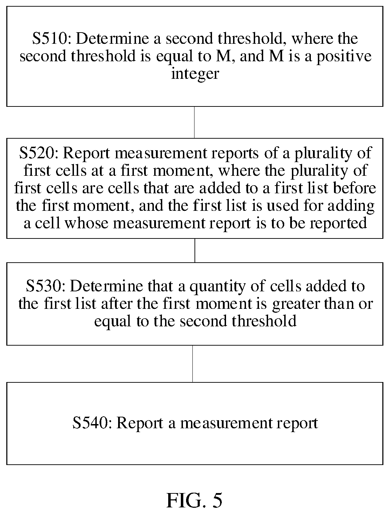

FIG. 5 is a flowchart of another method for reporting a measurement report according to an embodiment of this application. The method is applied to a terminal device. Further, the terminal device may be a UAV.

For ease of description, this mechanism for reporting a measurement report is a mechanism 2 in this application. The mechanism 2 includes the condition 1 and the condition 3 in the foregoing condition of triggering the terminal device to report a cell measurement report.

S510: Determine a second threshold, where the second threshold is equal to M, and M is a positive integer.

In some possible embodiments, a specific value may be adjusted based on a specific communication environment. The second threshold may be carried in a measurement configuration message delivered by a network device, or may be locally stored in the terminal device. This is not limited in embodiments of this application.

In some possible embodiments, the network device may adjust the second threshold in real time based on content of a measurement report reported by the terminal device, and deliver the second threshold to the terminal device. For example, there are a plurality of cells whose signal quality is higher than a specific threshold near the terminal device. Therefore, the network device needs to receive a latest cell measurement report about the terminal device in a more timely manner. Therefore, another threshold with a relatively small value, such as 1 or 2, may be set, and the threshold is delivered to the terminal device, to adjust a reporting policy of the mechanism 2 in real time.

S520: Report measurement reports of a plurality of first cells at a first moment, where the plurality of first cells are cells that are added to a first list before the first moment, and the first list is used for adding a cell whose measurement report is to be reported.

For a related embodiment of S520, refer to the related descriptions in the mechanism 1. For brevity, details are not described herein.

S530: Determine that a quantity of cells added to the first list after the first moment is greater than or equal to the second threshold.

S540: Report a measurement report.

In some possible embodiments, for a specific manner in which the terminal device reports a measurement report of a cell to the network device in the mechanism 2, refer to the related descriptions in the mechanism 1. Similarly, for a specific manner in which the terminal device reports the measurement report when the quantity of cells added to the first list is less than N, refer to the related descriptions in the mechanism 1. For brevity, details are not described herein.

In some possible embodiments, the terminal device may determine, by using a built-in counter, whether the quantity of cells added to the first list after the first moment is greater than or equal to the second threshold. It should be understood that, in some rare cases, as the terminal device moves, a plurality of cells may be simultaneously added to the first list. Therefore, the quantity of cells added to the first list after the first moment may be greater than the second threshold.

According to the foregoing technical solution, a quantity of cell measurement reports that are sent by the terminal device to the network device is reduced, and occurrence of a situation in which the network device cannot obtain a measurement report of a newly added cell in the first list is further reduced. In addition, time validity of a measurement report received by the network device is improved. Therefore, the mechanism 2 is more applicable to reporting a measurement report of a cell that triggers the measurement event A4.

The following describes in detail, by using an example, the another method for reporting a measurement report provided in the foregoing embodiments of this application.

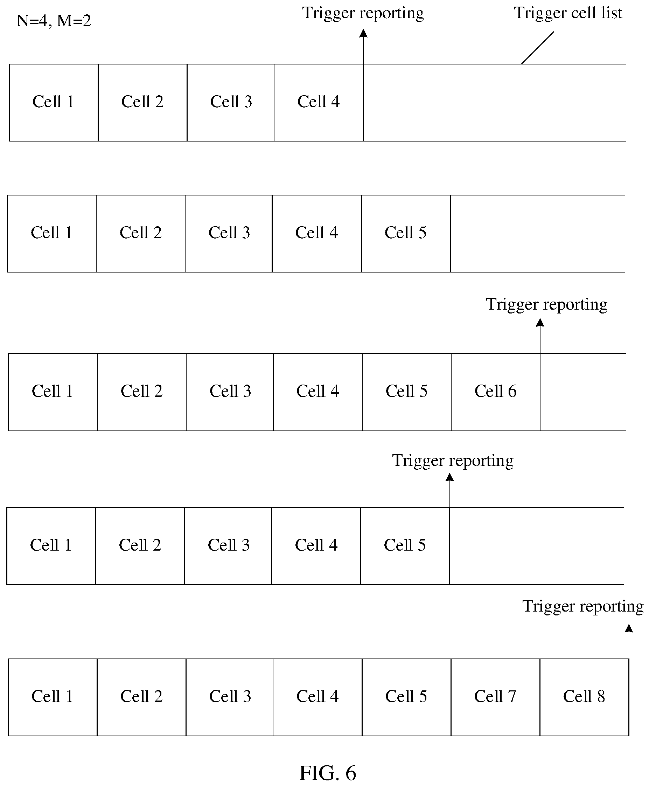

FIG. 6 is a diagram of another method for reporting a measurement report according to an embodiment of this application.

As shown in FIG. 6, a first threshold N=4, and a second threshold M=2. During movement of a terminal device, a cell 1, a cell 2, a cell 3, and a cell 4 are successively added to a first list. In this case, because a quantity of cells added to the first list reaches 4, the terminal device reports measurement reports of all cells in the first list in this case to a network device for the first time.

During subsequent movement of the terminal device, a cell 5 is also added to the first list. However, in this case, the terminal device is not triggered to perform a related operation of reporting a measurement report.

During subsequent movement of the terminal device, a cell 6 is also added to the first list. In this case, because the quantity of cells newly added to the first list reaches 2, the mechanism 2 may be triggered, and in this case, the terminal device is triggered to perform the related operation of reporting a measurement report.

During subsequent movement of the terminal device, the cell 6 no longer satisfies a condition of triggering a measurement event. Therefore, the cell 6 needs to be removed from the first list. Because a measurement report of the cell 6 has been reported before, the mechanism 1 may be triggered, and in this case, the terminal device is triggered to perform the related operation of reporting a measurement report.

During subsequent movement of the terminal device, a cell 7 is also added to the first list. Regardless of whether the foregoing mechanism 1 or mechanism 2 is used, the terminal device is not triggered to perform the related operation of reporting a measurement report. However, a cell 8 is subsequently added to the first list. In this case, because the quantity of cells newly added to the first list reaches 2 for the second time, the mechanism 2 may be triggered, and in this case, the terminal device is triggered to perform the related operation of reporting a measurement report.

Similarly, if a cell 9 and a cell 10 are subsequently added to the first list, the mechanism 2 is further triggered, and the terminal device performs the related operation of reporting a measurement report. The rest can be deduced by analogy.

It can be learned that, compared with the mechanism 1, the mechanism 2 has more opportunities to trigger reporting of a measurement report. Therefore, occurrence of a situation in which the network device cannot obtain a measurement report of a newly added cell in the first list is further reduced, and in addition, time validity of a measurement report received by the network device is improved.

For the mechanism 2, an embodiment of this application further provides a variant mechanism of the mechanism 2. In this application, the variant mechanism is referred to as a mechanism 3.

It should be understood that the mechanism 3 may be used in combination with the mechanism 1, or may be used independently.

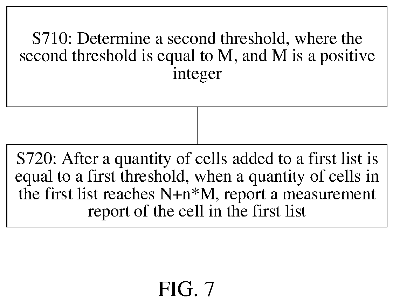

FIG. 7 is a flowchart of another method for reporting a measurement report according to an embodiment of this application. The method is applied to a terminal device. Further, the terminal device may be a UAV.

S710: Determine a second threshold, where the second threshold is equal to M, and M is a positive integer.

It should be understood that for a specific method for determining the second threshold and adjusting the second threshold in a timely manner, refer to the related descriptions in the mechanism 2. For brevity, details are not described herein.

S720: After a quantity of cells added to the first list is equal to a first threshold, when a quantity of cells in the first list reaches N+n*M, report a measurement report of the cell in the first list.

"n" is a positive integer greater than or equal to 1.

In some possible embodiments, condition information of triggering reporting of a cell measurement report in S720 may belong to the cell addition information provided in S220.

In some possible embodiments, N=4 and M=2. Therefore, after the quantity of cells added to the first list is equal to 4, when the quantity of cells in the first list is 6 (n=1), 8 (n=2), 10 (n=3), 12 (n=4), or the like, the terminal device is triggered to perform a related operation of reporting a measurement report.

In some possible embodiments, for a specific manner in which the terminal device reports a measurement report of a cell to the network device in the mechanism 3, refer to the related descriptions in the mechanism 1. For brevity, details are not described herein.

According to the foregoing technical solution, a quantity of cell measurement reports that are sent by the terminal device to the network device is reduced, and occurrence of a situation in which the network device cannot obtain a measurement report of a newly added cell in the first list is further reduced. In addition, time validity of a measurement report received by the network device is improved.

The following describes in detail, by using an example, the another method for reporting a measurement report provided in the foregoing embodiments of this application.

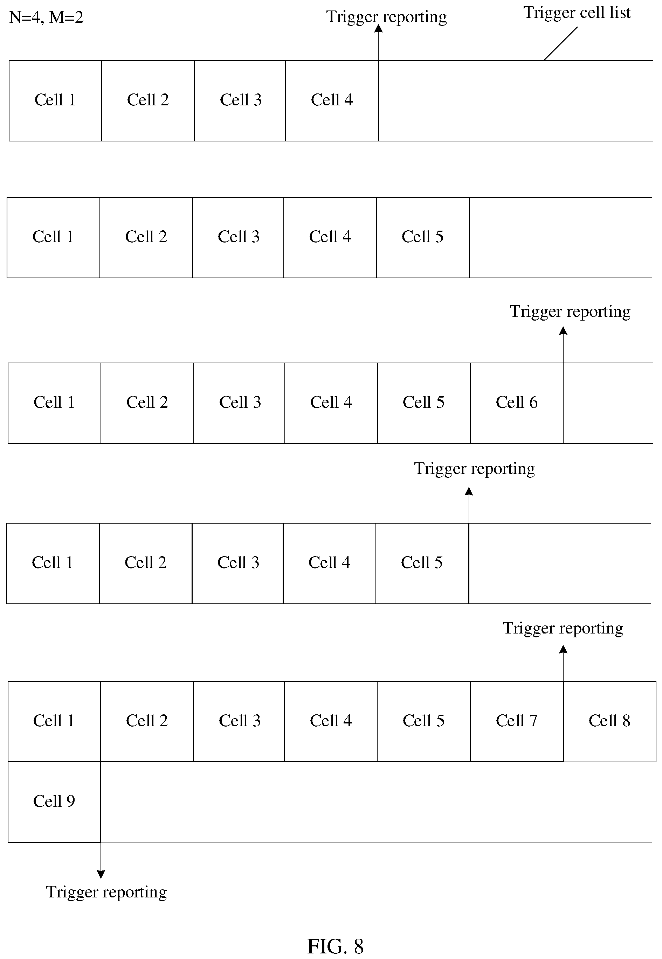

FIG. 8 is a diagram of a method for reporting a measurement report according to an embodiment of this application.

As shown in FIG. 8, a first threshold N=4, and a second threshold M=2. During movement of a terminal device, a cell 1, a cell 2, a cell 3, and a cell 4 are successively added to a first list. In this case, because a quantity of cells added to the first list reaches 4, the terminal device reports measurement reports of all cells in the first list in this case to a network device for the first time.

During subsequent movement of the terminal device, a cell 5 is also added to the first list. However, in this case, the terminal device is not triggered to perform a related operation of reporting a measurement report.

During subsequent movement of the terminal device, a cell 6 is also added to the first list. In this case, because a quantity of cells in the first list already reaches 6, the mechanism 3 may be triggered, and in this case, the terminal device is triggered to perform the related operation of reporting a measurement report.

During subsequent movement of the terminal device, the cell 6 no longer satisfies a trigger condition of a measurement event. Therefore, the cell 6 needs to be removed from the first list. Because a measurement report of the cell 6 has been reported before, the mechanism 1 may be triggered, and in this case, the terminal device is triggered to perform the related operation of reporting a measurement report.

During subsequent movement of the terminal device, a cell 7 is also added to the first list. In this case, because the quantity of cells in the first list reaches 6 again, the mechanism 3 may be triggered, and in this case, the terminal device is triggered to perform the related operation of reporting a measurement report.

Similarly, during subsequent movement of the terminal device, a cell 8 and a cell 9 are also successively added to the first list. In this case, because the quantity of cells in the first list reaches 8, the mechanism 3 may be triggered, and in this case, the terminal device is triggered to perform the related operation of reporting a measurement report.

In addition to the mechanisms 1, 2, and 3, an embodiment of this application further provides a timer-based measurement report reporting mechanism. For ease of description, this mechanism is referred to as a mechanism 4 in this application.

It should be understood that the mechanism 4 may be used in combination with the mechanism 1 (and/or) 2 or 3, or may be used independently.

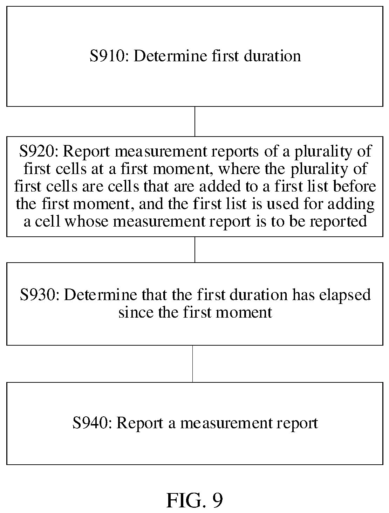

FIG. 9 is a flowchart of another method for reporting a measurement report according to an embodiment of this application. The method is applied to a terminal device. Further, the terminal device may be a UAV.

S910: Determine first duration.

In some possible embodiments, the first duration may be a time periodicity, and a specific value may be adjusted based on a specific communication environment. Similar to the second threshold, the first duration may be carried in a measurement configuration message delivered by a network device, or may be locally stored in the terminal device. This is not limited in embodiments of this application. For ease of description, a specific value of the first duration is replaced with T₀.

In some possible embodiments, similar to the second threshold, the network device may also adjust the first duration in real time based on content of a measurement report reported by the terminal device, and deliver the first duration to the terminal device. For example, there are a plurality of cells whose signal quality is higher than a specific threshold near the terminal device. Therefore, the network device needs to receive a latest cell measurement report about the terminal device in a more timely manner. Therefore, the first duration may be set to a relatively small value, such as 20 ms or 50 ms, and delivered to the terminal device, to adjust a reporting policy of the mechanism 4 in real time.

S920: Report measurement reports of a plurality of first cells at a first moment, where the plurality of first cells are cells that are added to a first list before the first moment, and the first list is used for adding a cell whose measurement report is to be reported.

For a related embodiment of S920, refer to the related descriptions in the mechanism 1. For brevity, details are not described herein.

S930: Determine that the first duration has elapsed since the first moment.

S940: Report a measurement report.

In some possible embodiments, for a specific manner in which the terminal device reports a measurement report of a cell to the network device in the mechanism 2, refer to the related descriptions in the mechanism 1. Similarly, for a specific manner in which the terminal device reports the measurement report when the quantity of cells added to the first list is less than N, refer to the related descriptions in the mechanism 1. For brevity, details are not described herein.

In some possible embodiments, in the first duration, it may be further determined whether a cell whose measurement report has been reported once is removed from the first list. If the cell does not exist, timing is continued until the first duration elapses; or if the cell exists, comparison is performed to determine whether a cell added to the first list at this time is different from a cell in the first list at the time when a measurement report is reported last time. If the two cells are different, timing is stopped and a measurement report of the cell in the first list is reported; or if the two cells are the same, no measurement report of the cell in the first list needs to be reported.

In some possible embodiments, starting from the first moment, when the first duration elapses, comparison is performed to determine whether the cell added to the first list at this time is different from the cell in the first list at the time when the measurement report is reported last time. If the two cells are different, the measurement report of the cell in the first list is reported; or if the two cells are the same, no measurement report of the cell in the first list needs to be reported.

In some possible embodiments, the terminal device may be indicated, by using a built-in timer, to periodically perform comparison to determine whether a cell added to the first list at each periodic time node is different from a cell whose measurement report is reported last time. The method for reporting a measurement report provided in the foregoing embodiment is used as an example. In first duration of the timer, the terminal device determines that the cell 1 is removed from the first list, and in this case, the quantity of cells in the first list is not less than the first threshold, and the terminal device determines that the terminal device has reported the measurement report of the cell 1 before. Therefore, based on the mechanism 1, an operation of reporting a measurement report by the terminal device to the network device may be directly triggered, and the timer is reset.

According to the foregoing technical solution, a quantity of cell measurement reports that are sent by the terminal device to the network device is reduced, and occurrence of a situation in which the network device cannot obtain a measurement report of a newly added cell in the first list is further reduced. In addition, time validity of a measurement report received by the network device is improved. Therefore, the mechanism 4 is applicable to reporting measurement reports of cells that trigger the measurement events A3, A4, and A5.

The following describes in detail, by using an example, the another method for reporting a measurement report provided in the foregoing embodiments of this application.

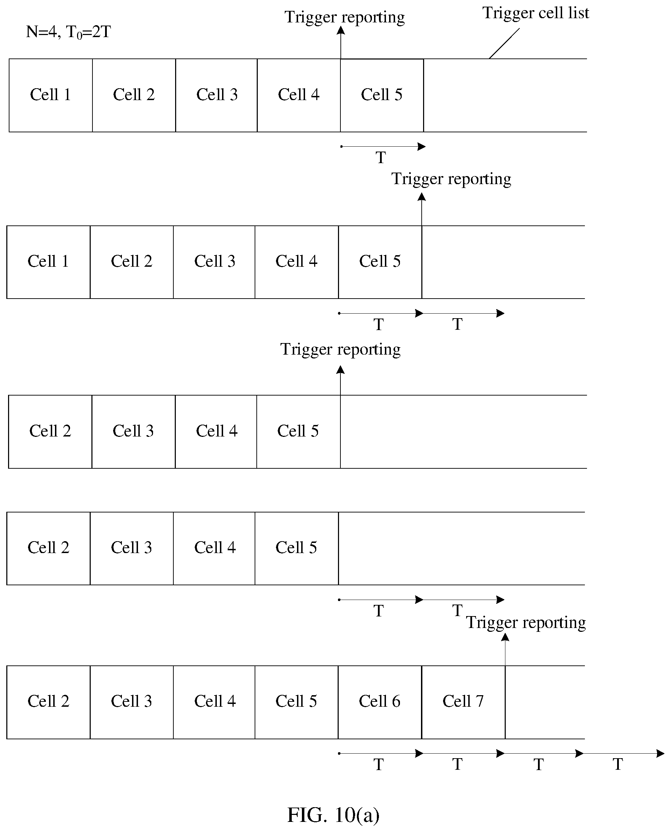

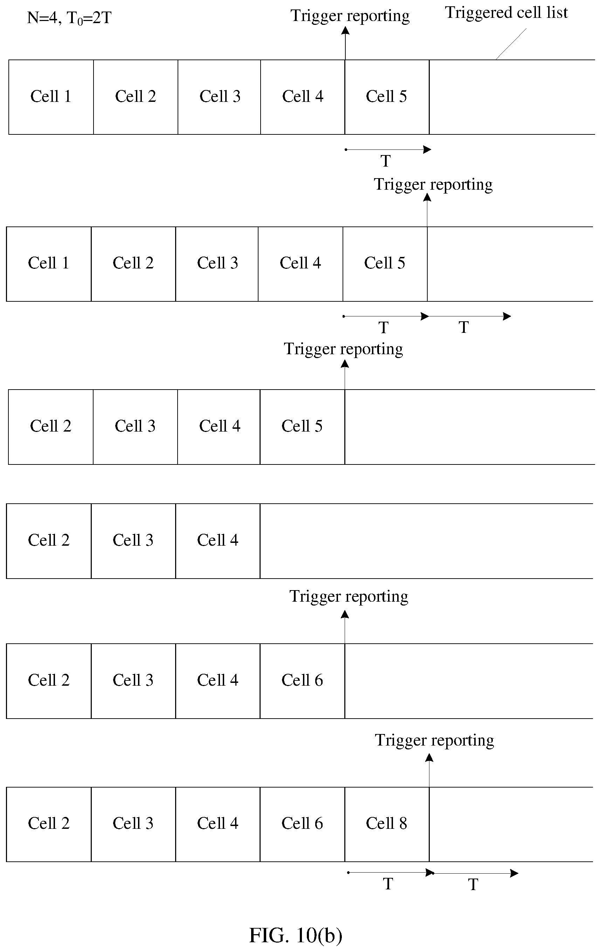

FIG. 10 is a diagram of a method for reporting a measurement report according to an embodiment of this application.

As shown in FIG. 10(a), a first threshold N=4, and first duration T₀ of a timer is two units of time. For ease of description, a length of one unit of time is set to T in this embodiment of this application, that is, T₀=2T.

During movement of a terminal device, a cell 1, a cell 2, a cell 3, and a cell 4 are successively added to a first list. In this case, because a quantity of cells added to the first list reaches 4, the terminal device reports measurement reports of all cells in the first list in this case to a network device for the first time, starts the timer, and adds this moment as the foregoing first moment t₁.

During a period from t₁ to t₁+T, a cell 5 is added to the first list. However, in this case, the terminal device is not triggered to perform a related operation of reporting a measurement report.

When the time arrives at t₁+2T, for ease of description, this moment is denoted as a second moment t₂ in this embodiment of this application. Cells in the first list at this time are compared with cells in the first list at the time when measurement reports are reported last time, and it is found that in comparison with cells in the first list at the first moment t₁, the cell 5 is newly added to the first list at the second moment t₂. Therefore, based on the mechanism 4, the terminal device is triggered to perform the related operation of reporting a measurement report, and adds this moment as the first moment t₁.

At a moment in t₁ to t₁+2T, the cell 1 no longer satisfies a trigger condition of a measurement event. Therefore, the cell 1 needs to be removed from the first list. Because a measurement report of the cell 1 has been reported before, the mechanism 1 may be triggered, and in this case, the terminal device is triggered to perform the related operation of reporting a measurement report, and resets the timer.

In this case, because a quantity of cells in a trigger cell queue is still equal to 4, when the foregoing reporting operation is completed, the timer further needs to be restarted, and this moment is added as the first moment t₁. When the time arrives at t₁+2T, that is, the second moment t₂, cells in the first list at this time are compared with the cells in the first list at the time when the measurement reports are reported last time, and it is found that the cells in the first list at the two moments are consistent. Therefore, it can be learned based on the mechanism 4 that, in this case, the terminal device is not triggered to perform the related operation of reporting a measurement report, and this moment is added as the first moment t₁.

When the time arrives at t₁+2T, that is, the second moment t₂, a cell 6 and a cell 7 are successively added to the first list in this period. At the second moment t₂, cells in the first list are compared with the cells in the first list at the time when the measurement reports are reported last time to find that the cell 6 and the cell 7 are newly added to the first list at the second moment t₂. Therefore, based on the mechanism 4, the terminal device is triggered to perform the related operation of reporting a measurement report, and re-adds this moment as the first moment t₁, to enter a related operation of next first duration.

As shown in FIG. 10(b), a first threshold N=4, and first duration of a timer is two units of time. For ease of description, a length of one unit of time is set to T in this embodiment of this application, that is, one first duration is 2T.

During movement of a terminal device, a cell 1, a cell 2, a cell 3, and a cell 4 are successively added to a first list. In this case, because a quantity of cells added to the first list reaches 4, the terminal device reports measurement reports of all cells in the first list in this case to a network device for the first time, starts the timer, and adds this moment as the foregoing first moment t₁.

During a period from t₁ to t₁+T, a cell 5 is added to the first list. However, in this case, the terminal device is not triggered to perform a related operation of reporting a measurement report.

When the time arrives at t₁+2T, for ease of description, this moment is denoted as a second moment t₂ in this embodiment of this application. Cells in the first list at this time are compared with cells in the first list at the time when measurement reports are reported last time, and it is found that in comparison with cells in the first list at the first moment t₁, the cell 5 is newly added to the first list at the second moment t₂. Therefore, based on the mechanism 4, the terminal device is triggered to perform the related operation of reporting a measurement report, and adds this moment as the first moment t₁.

At a moment in t₁ to t₁+2T, the cell 1 no longer satisfies a trigger condition of a measurement event. Therefore, the cell 1 needs to be removed from the first list. Because a measurement report of the cell 1 has been reported before, the mechanism 1 may be triggered, and in this case, the terminal device is triggered to perform the related operation of reporting a measurement report, and resets the timer.

In this case, because a quantity of cells in a trigger cell queue is still equal to 4, when the foregoing reporting operation is completed, the timer further needs to be restarted, and this moment is added as the first moment t₁. At a moment in t₁ to t₁+2T, the cell 5 no longer satisfies the trigger condition of a measurement event. Therefore, the cell 5 needs to be removed from the first list. In this case, because a quantity of cells in the first list is less than 4, and it is determined that reportOnLeave=false, the terminal device cannot be triggered to perform the related operation of reporting a measurement report, and stops the timer.

During subsequent movement of the terminal device, a cell 6 is added to the first list. In this case, because the quantity of cells added to the first list reaches 4, the terminal device can be triggered to perform the related operation of reporting a measurement report, restarts the timer, and adds this moment as the first moment t₁.

When the time arrives at t₁+2T, that is, the second moment t₂, a cell 8 is added to the first list in this period. At the second moment t₂, cells in the first list are compared with the cells in the first list at the time when the measurement reports are reported last time to find that the cell 8 is newly added to the first list at the second moment t₂. Therefore, based on the mechanism 4, the terminal device is triggered to perform the related operation of reporting a measurement report, and re-adds this moment as the first moment t₁, to enter a related operation of next first duration.

For the mechanism 4, an embodiment of this application further provides a variant mechanism of the mechanism 4. In this application, the variant mechanism is referred to as a mechanism 5.

It should be understood that the mechanism 5 may be used in combination with the mechanism 1 (and/or) 2 or 3, or may be used independently.

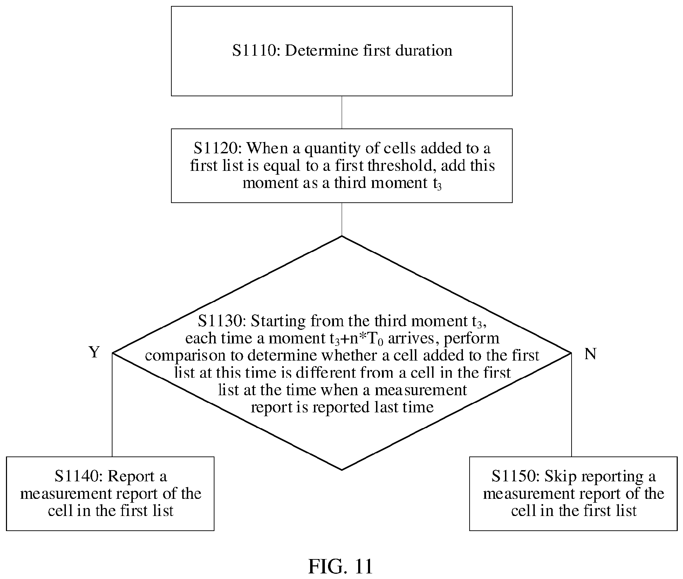

FIG. 11 is a flowchart of another method for reporting a measurement report according to an embodiment of this application. The method is applied to a terminal device. Further, the terminal device may be a UAV.

S1110: Determine first duration.

It should be understood that for a specific method for determining the first duration and adjusting the first duration in a timely manner, refer to the related descriptions in the mechanism 4. For brevity, details are not described herein.

S1120: When a quantity of cells added to a first list is equal to a first threshold, add this moment as a third moment t₃.

In some possible embodiments, the third moment t₃ may be added by using a built-in timer of the terminal device.

S1130: Starting from the third moment t₃, each time a moment t₃+n*T₀ arrives, perform comparison to determine whether a cell added to the first list at this time is different from a cell in the first list at the time when a measurement report is reported last time. If the two cells are different, S1140 is performed; or if the two cells are the same, S1150 is performed.

"n" is a positive integer greater than or equal to 1.

In some possible embodiments, condition information of triggering reporting of a cell measurement report in S1130 may belong to the reporting time information of a cell measurement report provided in S220.

S1140: Report a measurement report of the cell in the first list.

In some possible embodiments, when the quantity of cells added to the first list is equal to the first threshold, the timer is started, a current moment is added as the third moment t₃: 00:00.00, and T0=00:00.20, that is, 200 ms, is determined. Therefore, after the quantity of cells added to the first list is equal to 4, the third moment t₃ is used as a start point, and when a time point reaches 00:00.20 (n=1), 00:00.40 (n=2), 00:00.60 (n=3), 00:00.80 (n=4), or the like, the terminal device is triggered to perform the related operation of reporting a measurement report.

In some possible embodiments, similar to the mechanism 4, between t₃+(n-1)*T₀ and t₃+n*T₀, it is determined whether a cell whose measurement report has been reported once is removed from the first list. If the cell exists, a measurement report of the cell is reported to a network device, but the timer does not stop timing, in other words, the timer stops timing only when a quantity of cells in the first list is less than the first threshold; or if the cell does not exist, the network device is not triggered to report a measurement report of a cell.

In some possible embodiments, for a specific manner in which the terminal device reports a measurement report of a cell to the network device in the mechanism 5, refer to the related descriptions in the mechanism 1. Similarly, for a specific manner in which the terminal device reports the measurement report when the quantity of cells added to the first list is less than N, refer to the related descriptions in the mechanism 1. For brevity, details are not described herein.

S1150: Skip reporting a measurement report of the cell in the first list.

According to the foregoing technical solution, a quantity of cell measurement reports that are sent by the terminal device to the network device is reduced, and occurrence of a situation in which the network device cannot obtain a measurement report of a newly added cell in the first list is further reduced. In addition, time validity of a measurement report received by the network device is improved.

The following describes in detail, by using an example, the another method for reporting a measurement report provided in the foregoing embodiments of this application.

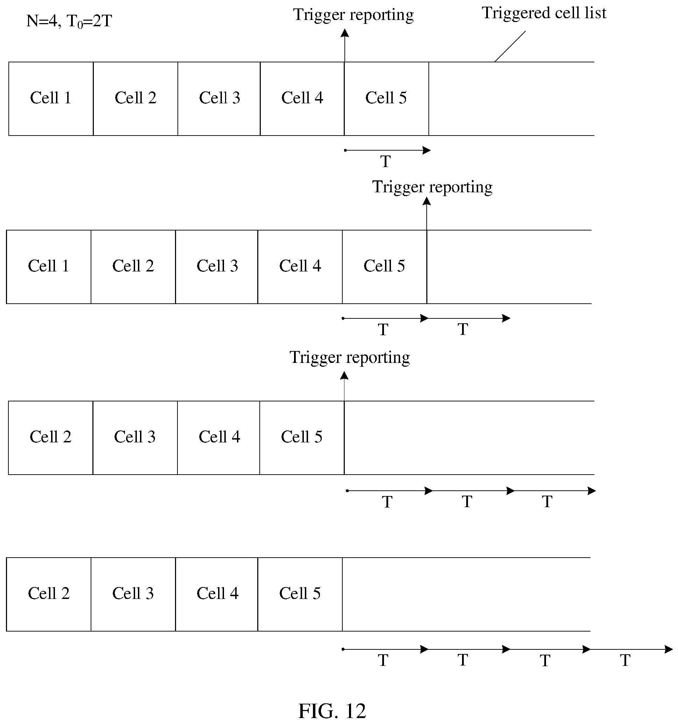

FIG. 12 is a diagram of a method for reporting a measurement report according to an embodiment of this application.

As shown in FIG. 12, a first threshold N=4, and first duration T₀ of a timer is two units of time. For ease of description, a length of one unit of time is set to T in this embodiment of this application, that is, T₀=2T.

During movement of a terminal device, a cell 1, a cell 2, a cell 3, and a cell 4 are successively added to a first list. In this case, because a quantity of cells added to the first list reaches 4, the terminal device reports measurement reports of all cells in the first list in this case to a network device for the first time, starts the timer, and adds this moment as the foregoing third moment t₃.

During a period from t₃ to t₃+T, a cell 5 is added to the first list. However, in this case, the terminal device is not triggered to perform a related operation of reporting a measurement report.

When the time arrives at t₃+1*T₀, cells in the first list at this time are compared with cells in the first list at the time when measurement reports are reported last time, and it is found that in comparison with cells in the first list at the third moment t₃, the cell 5 is newly added to the first list at the moment t₃+1*T₀. Therefore, based on the mechanism 5, the terminal device is triggered to perform the related operation of reporting a measurement report.

At a moment in t₃+1*T₀ to t₃+(3/2)*T₀, the cell 1 no longer satisfies a trigger condition of a measurement event. Therefore, the cell 1 needs to be removed from the first list. Because a measurement report of the cell 1 has been reported before, the mechanism 1 may be triggered, and in this case, the terminal device is also triggered to perform the related operation of reporting a measurement report. In this case, because a quantity of cells in a trigger cell queue is still equal to 4, it can be learned based on the mechanism 5 that the timer is not reset in this case.

When the time arrives at t₃+2*T₀, it can be learned based on the mechanism 5 that, cells in the first list at this time need to be compared with the cells in the first list at the time when the measurement reports are reported last time, and it is found that the cells in the first list at the two moments are consistent. Therefore, it can be learned based on the mechanism 5 that, in this case, the terminal device is not triggered to perform the related operation of reporting a measurement report.

An embodiment of this application further provides an apparatus for implementing any one of the foregoing methods. For example, an apparatus for reporting a measurement report is provided. The apparatus may be a submodule integrated into a terminal device, and includes a unit (or a means) configured to implement any one of the foregoing methods for reporting a measurement report.

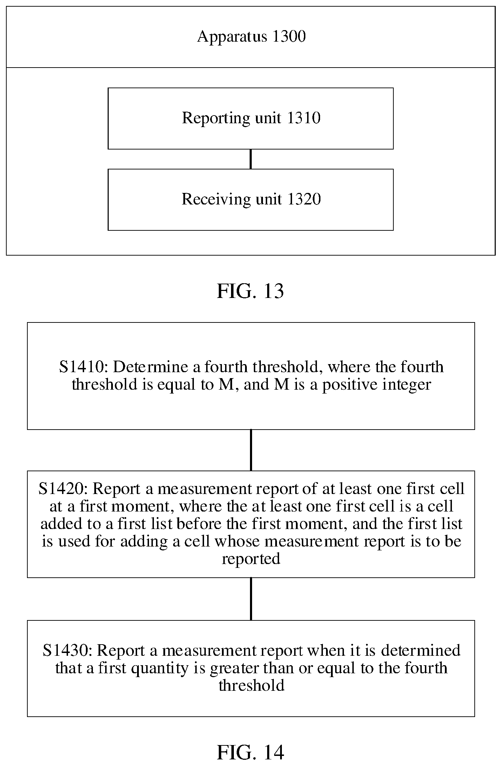

FIG. 13 is a schematic block diagram of a communication apparatus 1300 for reporting a measurement report according to an embodiment of this application. As shown in FIG. 13, the communication apparatus 1300 includes:
a reporting unit 1310, configured to report measurement reports of a plurality of first cells at a first moment, where the plurality of first cells are cells in a first list, the first list includes a cell whose measurement report is to be reported, and a quantity of cells in the first list is greater than or equal to a first threshold; and report a measurement report when at least one of the following conditions is satisfied: at least one of the first cells is removed from the first list, or a quantity of cells added to the first list after the first moment is greater than or equal to a second threshold, or first duration has elapsed since the first moment.

In some possible embodiments, the at least one condition further includes: a quantity of cells added to the first list in a first time period is greater than or equal to a third threshold, where the first time period is a time period that starts from the first moment and lasts for second duration, the third threshold is less than the second threshold, and the second duration is less than the first duration.

In some possible embodiments, the cells in the first list are cells that continuously trigger measurement events in time to trigger TTT.

In some possible embodiments, when at least one of the foregoing conditions is satisfied, the reporting unit 1310 is specifically configured to report measurement reports of all cells in the first list.

In some possible embodiments, when at least one of the foregoing conditions is satisfied, the reporting unit 1310 is specifically configured to report a measurement report of a cell that has not been reported in the first list.

In some possible embodiments, the communication apparatus 1300 further includes a receiving unit 1320, configured to receive the first threshold, the first duration, the second threshold, the second duration, and the third threshold that are sent by a network device.

In some possible embodiments, the first list includes a second cell. The second cell is a cell whose measurement report has not been reported. The reporting unit is further configured to: when the second cell is removed from the first list, skip triggering reporting of a measurement report.

In some possible embodiments, the apparatus further includes: an operating unit, configured to remove the second cell from the first list when at least one of the following situations occurs: signal quality of the second cell is continuously lower in a third time period than a fifth threshold used for triggering a measurement event, or a measurement report-related parameter in a report configuration of the terminal device is reconfigured, or the first threshold is reconfigured.

In some possible embodiments, a time length of the third time period may be a time length of the TTT.

In some possible embodiments, the at least one condition further includes: a first quantity is greater than or equal to a fourth threshold, where the first quantity is a quantity of first cells removed from the first list.

In some possible embodiments, the fourth threshold is configured through preconfiguration or network configuration.

In some possible embodiments, after the reporting a measurement report, the first quantity is set to zero, and/or when the fourth threshold is reconfigured, the first quantity is set to zero.

In some possible embodiments, when the first threshold is not reconfigured, and/or in a second time period that starts from the first moment and lasts for third duration, a third cell is removed from the first list K times, where the third cell is one of the plurality of first cells. The reporting unit is further configured to accumulate the first quantity once, where K is greater than 1.

In some possible embodiments, when a second cell is removed from a first list, reporting of a measurement report is not triggered, where the first list includes a cell whose measurement report is to be reported, and the second cell is a cell, in the first list, whose measurement report has not been reported.

It should be understood that, when the quantity of cells in the first list is less than the first threshold, the same is also applicable to the foregoing embodiment.

According to the foregoing technical solution, after a cell that has not been reported is removed from the first list, reporting of a measurement report is not triggered, thereby helping reduce signaling overheads caused by reporting of measurement reports.

In some possible embodiments, the second cell is removed from the first list when at least one of the following cases occurs: signal quality of the second cell is continuously lower in a third time period than a fifth threshold used for triggering a measurement event, or a measurement report-related parameter in a report configuration of the terminal device is reconfigured, or the first threshold is reconfigured.

In some possible embodiments, a time length of the third time period may be a time length of the TTT.

In some possible embodiments, the fifth threshold may also be referred to as a trigger threshold. If the signal quality of the second cell is continuously higher than or equal to the fifth threshold in the third time period, the second cell is not removed from the first list.

It should be understood that the measurement event may be the events A1 to A5, H1, and H2 in the foregoing embodiments.

FIG. 14 is a flowchart of another method for reporting a measurement report according to an embodiment of this application. The method is applied to a terminal device. Further, the terminal device may be a UAV. Reporting of a measurement report may also be triggered when the following condition is satisfied:
a first quantity is greater than or equal to a fourth threshold, where the first quantity is a quantity of first cells removed from a first list.

It should be understood that the first cells are cells whose measurement report has been reported.

In some possible embodiments, the fourth threshold may be configured through preconfiguration or network configuration.

For ease of description, this mechanism for reporting a measurement report is a mechanism 6 in this application.

In some possible embodiments, the mechanism 6 can be applicable whether the foregoing reportOnLeave is true or false. In addition, the mechanism 6 may be used in combination with the foregoing mechanism. The following specifically describes the mechanism 6 in detail. For content related to the foregoing mechanism, refer to the foregoing corresponding embodiments. Details are not described herein again.

The following describes the mechanism 6 with reference to the embodiment method corresponding to FIG. 2. For specific descriptions related to the embodiment corresponding to FIG. 2, refer to the foregoing embodiment. Details are not described herein again. Certainly, the mechanism 6 may also be used independently.

S1410: Determine a fourth threshold, where the fourth threshold is equal to M, and M is a positive integer.

In some possible embodiments, the fourth threshold may be a preset quantity threshold, and specifically indicates a quantity threshold (NumberOfReportedCellsForLeaving) of cells whose measurement report has been reported and that are removed from the first list. A specific value of the fourth threshold may also be adjusted based on a specific communication environment. The fourth threshold may be carried in a measurement configuration message delivered by a network device, or may be locally stored in the terminal device. This is not limited in embodiments of this application.

In some possible embodiments, the network device may adjust the fourth threshold in real time based on content of a measurement report reported by the terminal device, and deliver the fourth threshold to the terminal device. For example, quality of a plurality of signals near the terminal device is unstable, and relatively frequent handover may occur. Therefore, the network device needs to allow the terminal device to properly reduce a quantity of to-be-reported cell measurement reports. Therefore, another threshold with relatively large value, such as 3 or 5, may be set, and the threshold is delivered to the terminal device, to adjust a reporting policy of the mechanism 6 in real time.

In some possible embodiments, the network device may reconfigure a parameter such as the fourth threshold. In an example of a UAV application scenario, when a UAV reaches a corresponding height threshold or a corresponding height range, the network device may reset the parameter such as the fourth threshold based on network configuration a plurality of sets of configuration corresponding to a plurality of height values, or the terminal device may automatically adjust a corresponding threshold based on a correspondence between a height and a corresponding threshold that are preconfigured by a network.

In some possible embodiments, if UE automatically adjusts corresponding parameter configuration, for example, the foregoing TTT, based on a height, a speed, a location, or the like, currently running TTT needs to be reset.

S1420: Report a measurement report of at least one first cell at a first moment, where the at least one first cell is a cell added to the first list before the first moment, and the first list is used for adding a cell whose measurement report is to be reported.

For a related embodiment of S1420, refer to the related descriptions in the mechanism 1. For brevity, details are not described herein.

S1430: Report a measurement report when it is determined that the first quantity is greater than or equal to the fourth threshold.

The first quantity is a quantity of first cells removed from the first list.

In some possible embodiments, for a specific manner in which the terminal device reports a measurement report of a cell to the network device in the mechanism 6, refer to the related descriptions in the mechanism 1. Similarly, for a specific manner in which the terminal device reports the measurement report when the quantity of cells added to the first list is less than N, refer to the related descriptions in the mechanism 1. For brevity, details are not described herein.

In some possible embodiments, the terminal device may determine, by using a built-in counter, whether the first quantity is greater than or equal to the fourth threshold. It should be understood that these first cells are cells that have been reported at the first moment. In addition, in some rare cases, as the terminal device moves, a plurality of first cells may be simultaneously removed from the first list. Therefore, a quantity of first cells removed from the first list after the first moment may be greater than the fourth threshold.

According to the foregoing technical solution, reporting of a measurement report is triggered only when a quantity of reported first cells that are in the first list and that have left reaches the fourth threshold. This helps reduce a quantity of measurement reports reported by the terminal device, thereby reducing signaling overheads.

The following describes in detail, by using an example, the another method for reporting a measurement report provided in the foregoing embodiments of this application.

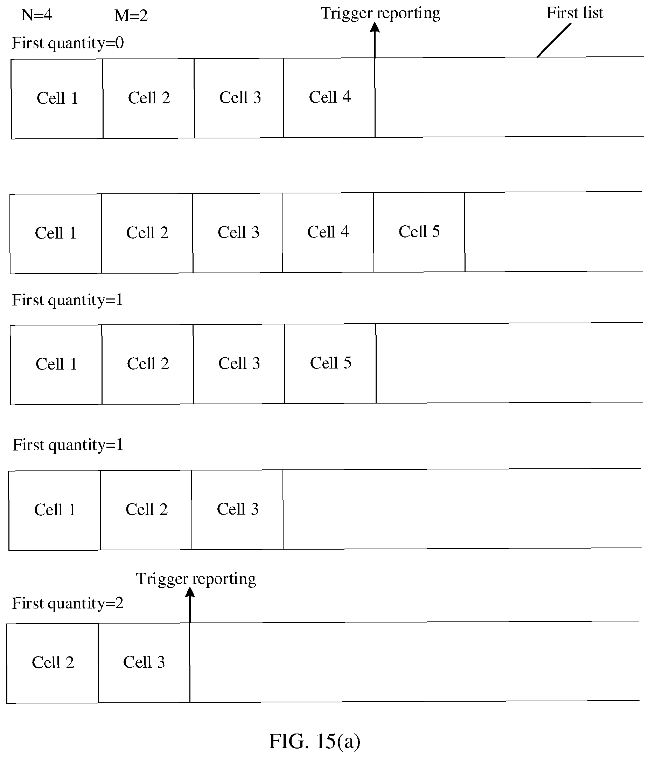

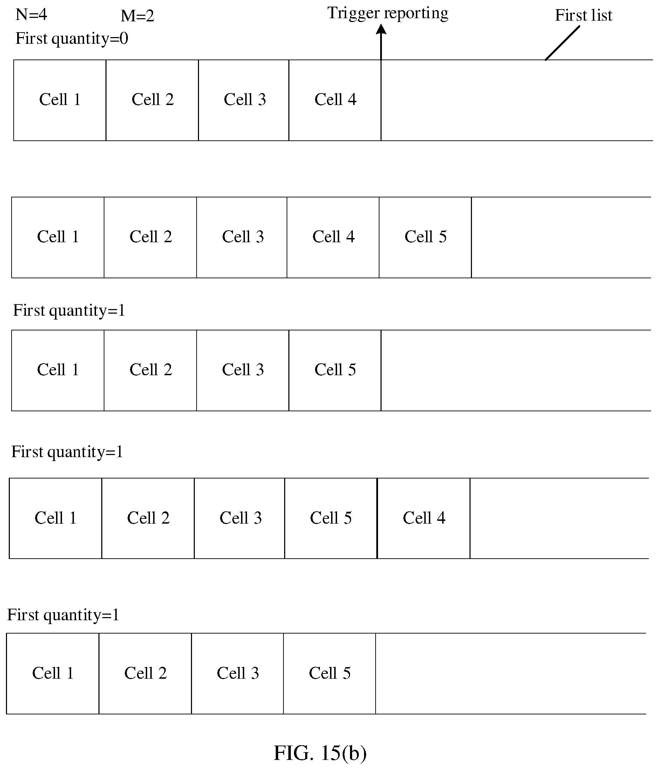

FIG. 15 is a diagram of another method for reporting a measurement report according to an embodiment of this application.

This embodiment is also described by using the mechanism 6 with reference to the embodiment method corresponding to FIG. 2. Certainly, the mechanism 6 may also be used independently.

As shown in FIG. 15(a), a first threshold N=4, and a fourth threshold M=2. During movement of a terminal device, a cell 1, a cell 2, a cell 3, and a cell 4 are successively added to a first list. In this case, because a quantity of cells added to the first list reaches 4, the terminal device reports measurement reports of all cells in the first list in this case to a network device for the first time, and starts a counter, where a count (the foregoing first quantity) is 0 in this case, to monitor whether a quantity of first cells removed from the first list is greater than or equal to the fourth threshold.

During subsequent movement of the terminal device, a cell 5 is also added to the first list. However, in this case, the terminal device is not triggered to perform a related operation of reporting a measurement report.

During subsequent movement of the terminal device, the cell 4 no longer satisfies a condition of triggering a measurement event. Therefore, the cell 4 needs to be removed from the first list. Because a measurement report of the cell 4 has been reported before, the counter is incremented by 1, and the count is 1 in this case.

During subsequent movement of the terminal device, the cell 5 no longer satisfies the condition of triggering a measurement event. Therefore, the cell 5 needs to be removed from the first list. Because a measurement report of the cell 5 has not been reported before, the counter does not perform any operation, and the counter is 1 in this case.

During subsequent movement of the terminal device, the cell 1 no longer satisfies the condition of triggering a measurement event. Therefore, the cell 1 needs to be removed from the first list. Because a measurement report of the cell 1 has been reported before, the counter is incremented by 1, and the count is 2 in this case, which is equal to the fourth threshold. Therefore, the mechanism 6 may be triggered. In this case, the terminal device is triggered to perform the related operation of reporting a measurement report, and the count of the counter is set to zero.

In some possible embodiments, if another mechanism for reporting a measurement report, for example, the mechanism 2, is triggered before the mechanism 6 is triggered, the count (the first quantity) of the counter may be set to zero.

In some possible embodiments, if the network device changes the fourth threshold before the mechanism 6 is triggered, for example, changes the fourth threshold from 2 to 3, the count (the first quantity) of the counter may be set to zero.

In some possible embodiments, to further reduce measurement reports reported by the terminal device, a count limitation may be further performed on the counter in the following scenario.

As shown in FIG. 15(b), a first threshold N=4, and a fourth threshold M=2. During movement of a terminal device, a cell 1, a cell 2, a cell 3, and a cell 4 are successively added to a first list. In this case, because a quantity of cells added to the first list reaches 4, the terminal device reports measurement reports of all cells in the first list in this case to a network device for the first time, and starts a counter, where a count is 0 in this case, to monitor whether a quantity of first cells removed from the first list is greater than or equal to the fourth threshold.

During subsequent movement of the terminal device, a cell 5 is also added to the first list. However, in this case, the terminal device is not triggered to perform a related operation of reporting a measurement report.

During subsequent movement of the terminal device, the cell 4 no longer satisfies a condition of triggering a measurement event. Therefore, the cell 4 needs to be removed from the first list. Because a measurement report of the cell 4 has been reported before, the counter is incremented by 1, and the count is 1 in this case.

During subsequent movement of the terminal device, the cell 4 is added to the first list because the cell 4 satisfies the condition of triggering a measurement event. However, in this case, the terminal device is not triggered to perform the related operation of reporting a measurement report. In this case, the count is 1.

During subsequent movement of the terminal device, the cell 4 no longer satisfies the condition of triggering a measurement event. Therefore, the cell 4 needs to be removed from the first list. Because the counter has been incremented by 1 before due to removal of the cell 4 from the first list, in this case, the counter is not incremented by 1, and the count is still 1 in this case. Therefore, the mechanism 6 is not triggered, and the terminal device does not perform the related operation of reporting a measurement report.

According to the foregoing technical solution, reporting of a measurement report triggered when a same cell is repeatedly added to and removed from the first list can be effectively reduced, thereby reducing signaling overheads caused by reporting of measurement reports.

In some possible embodiments, for the mechanism 6, a timer may be further added to properly control reporting of a cell measurement report. The terminal device starts the timer after removing a third cell from the first list. The third cell is one of the plurality of first cells, and duration of the timer is third duration. The third duration may be preconfigured by the network device, or may be determined by the terminal device. During running of the timer, if the third cell is removed from the first list and added to the first list K times, and K is greater than 1, the counter is incremented by 1 only once, in other words, the foregoing first quantity is accumulated only once. After the timer expires, if the foregoing cell is removed from the first list again, the counter is incremented by 1. In addition, if configuration of the terminal device, for example, RRC configuration or a fourth threshold, is not reconfigured by the network device in the third duration, when a same cell is repeatedly removed from and added to the first list in the third duration, the counter may be triggered to be incremented by 1 at most once.

In some possible embodiments, it can be learned based on the technical solution provided in the foregoing embodiment that, when the quantity of cells in the first list does not reach the first threshold, if a cell leaves the first list, the terminal device is not triggered to report a measurement report. However, this may be unfavorable for the network device to monitor an interference status of the terminal device. Because the quantity of cells in the first list does not reach the first threshold, the terminal device cannot report the measurement report, and an RLF may be caused. In view of this, the following methods can be used to resolve the problem in this scenario.

Method 1: When the quantity of cells in the first list has not reached the first threshold, in other words, the terminal device has not triggered reporting of a measurement report for the first time, in this period, the terminal device may specifically perform reporting of a measurement report in the following three manners:
(a) each time a cell is removed from the first list, triggering reporting of a measurement report;
(b) reporting a measurement report of the first cell added to the first list; and
(c) configuring a prohibit timer, where during running of the prohibit timer, reporting of a measurement report is prohibited. Reporting of a measurement report is allowed only after the prohibit timer expires. A moment when the prohibit timer starts timing may be any one of the following: a moment when a new cell is added to the first list, a moment when a cell is removed from the first list for the first time, or the like.

Method 2: When the quantity of cells in the first list is less than a threshold, where the threshold may be the first threshold, or may be another defined threshold, in this period, each time a cell is removed from the first list, reporting of a measurement report is triggered.

According to the foregoing technical solution, a scenario in which a quantity of cells in the first list does not reach the first threshold for a long time and the terminal device does not report a measurement report to the network device for a long time can be effectively avoided, thereby avoiding an RLF problem caused thereby.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for particular applications, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of the present invention may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of the present invention essentially, or the part contributing to the conventional technology, or a part of the technical solutions may be implemented in a form of a software product. The computer software product is stored in a storage medium, and includes several instructions for instructing a computer device (which may be a personal computer, a server, or a network device) to perform all or a part of the steps of the methods described in embodiments of the present invention. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for reporting a measurement report, comprising:
reporting measurement reports of a plurality of first cells at a first moment, wherein the plurality of first cells are cells in a first list, the first list comprises a cell whose measurement report is to be reported, and a quantity of cells in the first list is greater than or equal to a first threshold; and
reporting a measurement report when at least one of the following conditions is satisfied:
at least one of the first cells is removed from the first list; or
a quantity of cells added to the first list after the first moment is greater than or equal to a second threshold; or
first duration has elapsed since the first moment.

2. The method according to claim 1, wherein the at least one condition further comprises:
a quantity of cells added to the first list in a first time period is greater than or equal to a third threshold, wherein the first time period is a time period that starts from the first moment and lasts for second duration, the third threshold is less than the second threshold, and the second duration is less than the first duration.

3. The method according to claim 1 or 2, wherein the reporting a measurement report comprises:
reporting measurement reports of all cells in the first list.

4. The method according to claim 1 or 2, wherein the reporting a measurement report comprises:
reporting a measurement report of a cell that has not been reported in the first list.

5. The method according to any one of claims 1 to 4, wherein one or more of the first threshold, the first duration, the second threshold, the second duration, and the third threshold are delivered by a network device.

6. The method according to any one of claims 1 to 5, wherein the first list comprises a second cell, the second cell is a cell whose measurement report has not been reported, and the method further comprises:
when the second cell is removed from the first list, skipping triggering reporting of a measurement report.

7. The method according to claim 6, wherein the method further comprises:
removing the second cell from the first list when at least one of the following situations occurs:
signal quality of the second cell is continuously lower in a third time period than a fifth threshold used for triggering a measurement event; or
a measurement report-related parameter in a report configuration of a terminal device is reconfigured; or
the first threshold is reconfigured.

8. The method according to any one of claims 1 to 7, wherein the at least one condition further comprises:
a first quantity is greater than or equal to a fourth threshold, wherein the first quantity is a quantity of first cells removed from the first list.

9. The method according to claim 8, wherein the fourth threshold is configured through preconfiguration or network configuration.

10. The method according to claim 8 or 9, wherein the method further comprises:
after the reporting a measurement report, setting the first quantity to zero; and/or
when the fourth threshold is reconfigured, setting the first quantity to zero.

11. The method according to any one of claims 8 to 10, wherein when the first threshold is not reconfigured, and/or in a second time period that starts from the first moment and lasts for third duration, the method further comprises:
when a third cell is removed from the first list K times, wherein the third cell is one of the plurality of first cells, accumulating the first quantity once, wherein K is greater than 1.

12. A communication apparatus for reporting a measurement report, comprising:
a reporting unit, configured to report measurement reports of a plurality of first cells at a first moment, wherein the plurality of first cells are cells in a first list, the first list comprises a cell whose measurement report is to be reported, and a quantity of cells in the first list is greater than or equal to a first threshold; and report a measurement report when at least one of the following conditions is satisfied:
at least one of the first cells is removed from the first list; or
a quantity of cells added to the first list after the first moment is greater than or equal to a second threshold; or
first duration has elapsed since the first moment.

13. The communication apparatus according to claim 12, wherein the at least one condition further comprises:
a quantity of cells added to the first list in a first time period is greater than or equal to a third threshold, wherein the first time period is a time period that starts from the first moment and lasts for second duration, the third threshold is less than the second threshold, and the second duration is less than the first duration.

14. The communication apparatus according to claim 12 or 13, wherein when the at least one condition is satisfied, the reporting unit is specifically configured to:
report measurement reports of all cells in the first list.

15. The communication apparatus according to claim 12 or 13, wherein when the at least one condition is satisfied, the reporting unit is specifically configured to:
report a measurement report of a cell that has not been reported in the first list.

16. The communication apparatus according to any one of claims 12 to 15, wherein the apparatus further comprises:
a receiving unit, configured to receive the first threshold, the first duration, the second threshold, the second duration, and the third threshold that are sent by a network device.

17. The apparatus according to any one of claims 12 to 16, wherein the first list comprises a second cell, the second cell is a cell whose measurement report has not been reported, and the reporting unit is further configured to:
when the second cell is removed from the first list, skip triggering reporting of a measurement report.

18. The apparatus according to claim 17, wherein the apparatus further comprises:
an operating unit, configured to remove the second cell from the first list when at least one of the following situations occurs:
signal quality of the second cell is continuously lower in a third time period than a fifth threshold used for triggering a measurement event; or
a measurement report-related parameter in a report configuration of a terminal device is reconfigured; or
the first threshold is reconfigured.

19. The apparatus according to any one of claims 12 to 18, wherein the at least one condition further comprises:
a first quantity is greater than or equal to a fourth threshold, wherein the first quantity is a quantity of first cells removed from the first list.

20. The apparatus according to claim 19, wherein the fourth threshold is configured through preconfiguration or network configuration.

21. The apparatus according to claim 19 or 20, wherein the reporting unit is further configured to:
after the reporting a measurement report, set the first quantity to zero; and/or
when the fourth threshold is reconfigured, set the first quantity to zero.

22. The apparatus according to any one of claims 19 to 21, wherein when the first threshold is not reconfigured, and/or in a second time period that starts from the first moment and lasts for third duration, a third cell is removed from the first list K times, wherein the third cell is one of the plurality of first cells, and the reporting unit is further configured to:
accumulate the first quantity once, wherein K is greater than 1.

23. A communication apparatus for reporting a measurement report, comprising:
a memory, configured to store computer instructions; and
a processor, configured to execute the computer instructions stored in the memory, to enable the apparatus to perform the method according to any one of claims 1 to 11.

24. A computer-readable storage medium, wherein the computer-readable storage medium stores computer instructions, and when the instructions are executed on a computer, the apparatus is enabled to perform the method according to any one of claims 1 to 11.

25. A computer program product, wherein the computer program product comprises a computer program or instructions, and when the computer program is executed or the instructions are executed on a computer, the apparatus is enabled to perform the method according to any one of claims 1 to 11.

26. A chip, comprising a processor, wherein the processor is configured to perform the method according to any one of claims 1 to 11.

27. An uncrewed aerial vehicle, comprising the apparatus according to any one of claims 12 to 22.
